Europäisches Patentamt

European Patent Office

Office européen des brevets

(19)

(11) Numéro de publication: **0 094 322 B1**

# FASCICULE DE BREVET EUROPEEN

(12)

(45) Date de publication du fascicule du brevet:
**10.12.86**

(51) Int. Cl.⁴: **H 04 L 11/20**

(21) Numéro de dépôt: **83400948.2**

(22) Date de dépôt: **10.05.83**

(54) **Coupleur à haut débit entre un multiplex de voies MIC et un commutateur de paquets.**

(30) Priorité: **10.05.82 FR 8208081**

(43) Date de publication de la demande:
**16.11.83 Bulletin 83/46**

(45) Mention de la délivrance du brevet:
**10.12.86 Bulletin 86/50**

(84) Etats contractants désignés:
**BE CH DE GB IT LI NL SE**

(56) Documents cités:
**EP - A - 0 011 540**
**GB - A - 2 005 965**

**PATENTS ABSTRACTS OF JAPAN, vol. 4, no. 63, 13 mai 1980, page 18 E 10**

(73) Titulaire: **Bodros, Christian, Squibernevez-Pédernec,
F-22540 Louargat (FR)**
Titulaire: **Le Besco, Joel, Rerhars Caouennec,
F-22300 Lannion (FR)**
Titulaire: **Sichez, Yves, 14, rue de Saintonge,
F-29200 Brest (FR)**

(72) Inventeur: **Bodros, Christian, Squibernevez-Pédernec,
F-22540 Louargat (FR)**
Inventeur: **Le Besco, Joel, Rerhars Caouennec,
F-22300 Lannion (FR)**
Inventeur: **Sichez, Yves, 14, rue de Saintonge,
F-29200 Brest (FR)**

(74) Mandataire: **Martinet & Lapoux, 62, rue des Mathurins,
F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un coupleur à haut débit entre un multiplex bidirectionnel de voies MIC et un commutateur de paquets. Les voies MIC convoient des mots, tels que des octets, ayant un nombre prédéterminé de bits et sont multiplexées mot à mot. En général, certaines voies MIC sont en mode-circuit et d'autres sont en mode-paquet, le commutateur étant alors un commutateur mixte qui commute aussi bien des voies en mode-circuit par exemple véhiculant la parole échantillonnée, que des voies en mode-paquet véhiculant chacune des trames d'une ou plusieurs voies logiques.

Conformément aux recommandations internationales, les trames de chaque voie en mode-paquet sont séparées les unes des autres par des drapeaux qui sont des mots ayant une configuration prédéterminée telle que 01111110, et chaque trame sur le multiplex contient un zéro de bourrage après cinq «1» consécutifs afin qu'elle puisse être détectée convenablement.

Le coupleur à haut débit est analogue à une interface entrée-sortie et traite le premier niveau relatif aux bits du niveau trame de la procédure des échanges de paquets. A la réception, le coupleur extrait les zéros de bourrage dans les trames reçues provenant du multiplex afin que le commutateur puisse traiter les trames au second niveau du niveau trame et au niveau paquet de la procédure, contrôle une séquence de contrôle de trame, compte les octets et les zéros extraits dans chaque trame et détecte les drapeaux et les début et fin de chaque trame. Réciproquement, à l'émission, le coupleur insère les zéros de bourrage dans les trames émises par le commutateur, génère la séquence de contrôle de trame dans chaque trame, émet les octets fournis par le commutateur, génère des drapeaux et abandonne certaines trames ou met au repos certaines voies.

Pour extraire les zéros de bourrage en vue de reconstituer les trames initiales ayant un nombre de mots prédéterminés, il est nécessaire de connaître le nombre de zéros déjà extraits dans les mots déjà reçus de la même trame. Inversement, pour insérer les zéros de bourrage dans les trames initiales, il est nécessaire de connaître le nombre de zéros déjà insérés dans les mots déjà émis de la même trame.

Dans des coupleurs à haut débit connus, le traitement des mots reçus en vue de l'extraction des zéros et des mots émis en vue de l'insertion des zéros s'effectuent trame par trame. Le traitement exige donc la mémorisation de toute la trame reçue ou émise, suite à la détection des drapeaux d'ouverture et de fermeture de la trame. Puis après mémorisation de la trame, l'extraction ou l'insertion des zéros a lieu en différé. De telles conditions ont pour inconvénients majeurs de nécessiter une capacité de mémoire très grande en proportion non seulement avec le nombre de voies MIC multiplexées mais également avec le nombre de mots contenus dans les trames. En outre, étant donné que la réception ou l'émission des trames n'est pas synchrone, des moyens d'insertion et d'extraction de zéros de bourrage doivent être assignés à chaque voie MIC.

D'autres coupleurs «composites» connus comprennent des coupleurs élémentaires assignés chacun à une voie, ce qui impose un grand nombre de coupleurs élémentaires et de liaison entre ces derniers et le commutateur.

Le but de la présente invention est de fournir un coupleur dans lequel la capacité de mémoire est réduite au maximum, c'est-à-dire aux caractéristiques de traitement d'un mot de chaque voie, et dans lequel les moyens de traitement des trames sont communs à toutes les voies en mode-paquet.

A cette fin, un coupleur conforme à l'invention est caractérisé en ce que les moyens d'extraction et d'insertion des zéros de bourrage comprennent chacun des moyens logiques pour traiter uniquement un mot prédéterminé à la fois et transmettre au moins une partie de celui-ci sous la forme d'un mot et des moyens de mémorisation ayant autant de cellules de mémoire que de voies pour mémoriser dans chaque cellule des caractéristiques écrites après le traitement d'un mot d'une voie et lues pour le traitement du mot suivant de ladite voie après les traitements des autres voies, à raison d'un mot par voie.

Les moyens logiques de traitement peuvent comprendre des mémoires mortes de préférence programmables (PROM) ou des réseaux logiques de préférence programmables (FPLA).

Le cycle de traitement d'un mot peut être résumé de la manière suivante. Pendant l'intervalle de temps d'un mot d'une voie MIC, les moyens de mémorisation fournissent des caractéristiques appelées contextes, obtenues lors du traitement du mot précédent de la même voie, aux moyens logiques. Ainsi, pour des trames MIC ayant une durée de 125 µs, et incluant trente-deux octets assignés chacun à une voie à 64 kbit/s, le mot d'une voie ainsi que le contexte écrit en mémoire 125 µs auparavant sont traités par les moyens logiques. Le nouveau contexte est rangé en mémoire pour le traitement du mot suivant de la même voie qui aura lieu 125 µs après un traitement analogue d'un mot de chacune des autres voies MIC par les mêmes moyens logiques. Les mots sont ainsi traités au fur et à mesure de leur réception et non pas, comme selon l'art antérieur évoqué ci-dessus, après la réception de la trame complète. Le coupleur se distingue aussi des coupleurs composites connus dans lesquels le multiplex est démultiplexé en la pluralité de voies afin que chacune de celles-ci soit traitée par un coupleur élémentaire.

Selon une autre caractéristiques de l'invention, les moyens d'extraction de zéros de bourrage comprennent des moyens logiques pour compter le nombre de «1» en queue de chaque mot provenant du multiplex, des moyens pour mémoriser ledit nombre de «1» d'un mot de chaque voie, des moyens logiques pour détecter les zéros de bourrage à extraire dans un mot provenant du multiplex en fonction notamment du nombre de «1»

mémorisé du mot précédent de la même voie, des moyens logiques pour rejeter à la fin d'un mot les zéros de bourrage détectés, des moyens logiques pour extraire les zéros de bourrage détectés dans un mot et les remplacer en début de mot par les derniers bits du mot précédent, des moyens pour mémoriser un mot de chaque voie avec zéros de bourrage extraits, des moyens logiques pour compter le nombre de zéros de bourrage modulo le nombre prédéterminé de bits dans chaque voie au fur et à mesure de la réception des mots de ladite voie, des moyens pour mémoriser ledit nombre de zéros de bourrage pour chaque voie et des moyens logiques de recadrage sous forme d'un mot à transmettre au commutateur incluant au début des bits de fin d'un mot mémorisé avec zéros de bourrage extraits pour chaque voie et à la fin des bits de début du mot suivant de ladite voie avec des zéros de bourrage à la fin, le nombre desdits bits de début du mot suivant étant égal au nombre mémorisé de zéros de bourrage de ladite voie après le traitement dudit mot à transmettre.

Selon une autre caractéristique de l'invention, les moyens d'insertion de zéros de bourrage comprennent des moyens logiques pour insérer les zéros de bourrage dans un mot provenant du commutateur, des moyens logiques pour compter le nombre de «1» en queue de chaque mot sortant des moyens d'insertion de zéros de bourrage, des moyens pour mémoriser ledit nombre de «1» pour un mot de chaque voie, des moyens logiques pour compter le nombre de zéros de bourrage à insérer dans un mot provenant du commutateur en fonction notamment du nombre de «1» mémorisé du mot précédent de la même voie, des moyens logiques pour former un mot avec les bits de début du mot avec les zéros de bourrage, des moyens logiques pour former un mot avec les bits de fin de mot avec les zéros de bourrage, des moyens pour mémoriser les bits de fin d'un mot avec les zéros de bourrage de chaque voie, des moyens logiques pour compter le nombre de zéros de bourrage insérés modulo le nombre prédéterminé de bits dans chaque voie au fur et à mesure de l'émission des mots de ladite voie afin de tenir à jour le décalage entre le mot à transmettre sur le multiplex et le mot provenant du commutateur, des moyens pour mémoriser ledit nombre de zéros de bourrage pour chaque voie, et des moyens logiques de décadrage sous forme d'un mot à transmettre sur le multiplex incluant les bits de fin d'un mot précédent mémorisé avec zéros de bourrage pour chaque voie et les bits de début du suivant avec zéros de bourrage de ladite voie, le nombre desdits bits de fin de mot précédent étant égal au nombre mémorisé de zéros de bourrage de ladite voie après le traitement dudit mot précédent.

D'autres caractéristiques et avantages de la présente invention apparaîtront plus clairement à la lecture de la description qui suit d'un mode de réalisation préféré du coupleur selon l'invention, en référence aux dessins annexés correspondants dans lesquels:

les Figs. 1A à 1C sont des diagrammes temporels montrant le multiplexage des voies multiplex à 2048 kbit/s dans un supermultiplex à 16384 kbit/s, le mulitplexage des voies à commuter à 64 kbit/s dans une voie à 2048 kbit/s, et la structure d'une trame en mode-paquet;

La Fig. 2 est un bloc-diagramme schématique montrant le coupleur entre le supermultiplex et le commutateur;

la Fig. 3 est un bloc-diagramme schématique montrant l'organisation du coupleur autour de logiques combinatoires et de mémoires RAM ainsi que les moyens d'adressage de ces mémoires;

la Fig. 4 est un diagramme temporel montrant les signaux pour l'adressage des mémoires RAM;

la Fig. 5 est un bloc-diagramme détaillé des moyens d'extraction de zéros de bourrage inclus dans la partie de réception du coupleur;

la Fig. 6 est un bloc-diagramme détaillé du circuit de contrôle de parité inclus dans la partie de réception;

les Fig 7A et 7B sont un bloc-diagramme détaillé des moyens d'insertion de zéros de bourrage dans la partie d'émission du coupleur;

la Fig. 8 est un bloc-diagramme détaillé du circuit de génération de signaux de séquencement des opérations propres à l'émission et de comptage d'octets et du circuit de calcul de la séquence de contrôle de trame inclus dans la partie d'émission; et

la Fig. 9 est un diagramme temporel des signaux d'horloge mémorisés dans la partie d'émission.

Le mode de réalisation décrit ci-après se rapporte à un coupleur selon une procédure de commande de liaison à haut niveau dite HDLC (en anglais «High Level Data Link Control») définie par l'Organisation Internationale de Normalisation (ISO). Les principes et la terminologie de la procédure HDLC utilisés dans la présente description sont conformes à l'Avis X.25, Fascicule VIII.2, livre jaune, Genève 1976, modifié à Genève 1980, publié par le Comité Consultatif International Télégraphique et Téléphonique (CCITT).

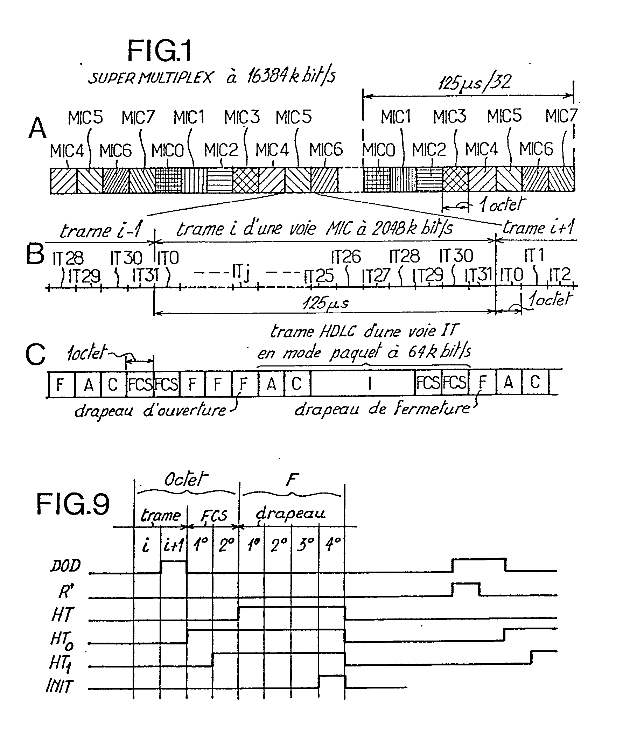

Le coupleur constitue une interface entre un supermultiplex bidirectionnel à 16384 kbit/s et un commutateur mixte qui commute des voies en mode-circuit et des voies en mode-paquet qui sont au débit de 64 kbit/s. Un tel commutateur est détaillé dans la demande de brevet français 82-08 080 déposée le 10 Mai 1982 au nom des demandeurs. Le supermultiplex est composé de huit voies MIC multiplexées, MIC0 et MIC7, au débit de 2048 kbit/s, comme montré à la Fig. 1A. Chaque voie est obtenue par le multiplexage de 32 voies à 64 kbit/s, comme montré à la Fig. 1B. Dans le supermultiplex pendant une durée de 125/32 = 3,9 µs, les huit voies MIC0 et MIC7 sont multiplexées octet par octet. De même dans la trame d'une voie MIC ayant une durée de 125 µs, trente deux vois élémentaires IT0 à IT31 à 64 kbit/s sont multiplexées octet par octet. Ce sont les voies IT qui seront commutées deux-à-deux dans le commutateur.

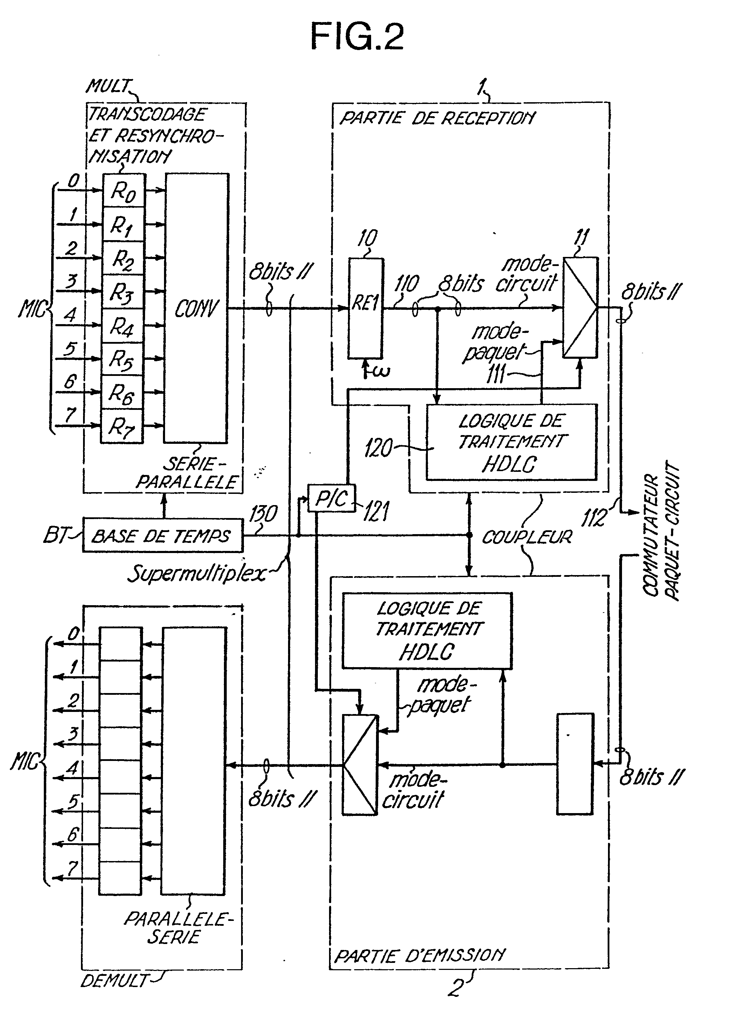

Dans la pratique, le commutateur avec son coupleur HDLC constitue un nœud tel qu'un central de transit, ou bien un central local d'un réseau de commutation public en mode-circuit et en mode-paquet. Par exemple, comme montré à la Fig. 2, le supermultiplex à 16384 kbit/s peut être obtenu au niveau du nœud de commutation à partir du multiplexage de huit voies MIC0 à MIC7 à 2048 kbit/s qui proviennent par exemple chacune d'un autre nœud de commutation du réseau public. Le registre d'entrée 10 de la partie de réception 1 du coupleur HDLC est alors précédé classiquement d'un multiplexeur MULT qui multiplexe les 8 voies entrantes MIC0 et MIC7 et qui est composé classiquement de huit étages de transcodage – du code en ligne, tel que le code HDB3, en code binaire – et de resynchronisation $R_0$ à $R_7$ des voies MIC0 à MIC7 avec une base de temps locale BT. Les étages R sont reliés à un convertisseur série parallèle CONV. La sortie du convertisseur applique successivement les octets multiplexés des $32 \times 8 = 256$ voies IT à 64 kbit/s sur un bus parallèle à 8 fils à l'entrée du registre tampon d'entrée 10, à raison d'un octet tous les $\omega = 125/(32 \times 8)$ µs = 488 ns. En émission, un démultiplexeur DEMULT démultiplexe les octets du supermultiplex sortant de la partie d'émission 2 du coupleur HDLC en les huit voies sortantes MIC0 à MIC7 respectives. La base de temps locale BT est commune au coupleur, au commutateur et aux interfaces annexes telles que le multiplexeur-démultiplexeur MULT-DEMULT.

Chaque voie IT véhicule soit de l'information en mode-circuit qui correspond par exemple à l'échantillonnage d'une voie de parole téléphonique classique à la fréquence de 8 kHz, soit de l'information en mode-paquet qui correspond à des trames d'un ou plusieurs paquets séparées par des drapeaux. La présente invention ne s'intéresse qu'au traitement des voies IT en mode-paquet au niveau trame en y incluant le comptage d'octets et le contrôle de parité. Comme on le voit dans la Fig. 2, les octets IT en mode-circuit traversent directement la partie de réception 1, du registre d'entrée 10 (RE1) vers un circuit de multiplexage de sortie 11, via un bus de dérivation à huit fils 110. Uniquement les octets des voies IT en mode-paquet délivrés par le registre d'entrée 10 sont traités par la logique de traitement HDLC 120 du coupleur, laquelle, après traitement, les redélivrera à un autre bus d'entrée 111 du circuit de multiplexage de sortie 11. Le multiplexage des octets à 8 bits parallèles en mode-circuit et en mode-paquet dans le circuit 11 sur un bus de sortie à 8 fils 112 qui est relié à la mémoire tampon du commutateur paquet-circuit, est sélectionné par un bit P/C d'indication de mode-paquet (P) ou de mode-circuit (C) qui est transmis par une mémoire RAM 121 adressée par la base de temps BT.

Le coupleur ne considère que la partie couramment appelée «niveau bit» de la procédure HDLC qui est en fait une partie du niveau trame dont les principales caractéristiques seront rappelées ci-après. Par contre, le commutateur considère le niveau supérieur du niveau trame de la procédure HDLC et le niveau-paquet selon l'Avis X.25 en vue de la gestion des trames et de la commutation des paquets.

Dans chaque voie IT à 64 kbit/s sont convoyées des trames HDLC comme montré à la Fig. 1C. Chaque trame HDLC est composée d'au moins quatre octets qui sont un octet d'adresse A en dépendance de l'émission et de la réception, un octet de commande C et deux octets de la séquence de contrôle de trame FCS (en anglais «Frame Checking Sequence»). Lorsque la trame est une trame d'information, celle-ci contient des bits d'information qui constituent le paquet et qui sont inclus dans un champ d'information I entre le champ de commande et le champ de la séquence de contrôle FCS. Généralement, la longueur du champ d'information est limitée, par exemple à $32 \times 8 = 256$ bits.

Entre les trames est transmis un nombre entier de drapeaux. Chaque séquence de drapeau est formée par un «0» suivi par six «1» consécutifs et un «0», soit l'octet «01111110». Un même drapeau peut être utilisé à la fois comme drapeau de fermeture pour une trame HDLC, lequel succède au champ de la séquence de contrôle FCS, et comme drapeau d'ouverture pour la trame HDLC suivante, lequel précède le champ d'adresse de ladite trame suivante. Afin de s'assurer qu'une séquence de drapeau n'est pas simulée dans une trame, la partie d'émission 2 du coupleur HDLC – équivalent en partie à un équipement terminal de traitement de données (ETTD) – doit insérer un élément binaire «0», appelé zéro de bourrage, après toute séquence de cinq éléments «1» consécutifs, y compris dans les éléments de la séquence de contrôle FCS. La partie d'émission «décadre» donc les octets de la trame émise. Réciproquement, en vue de son traitement au niveau paquet dans le commutateur, la partie de réception 1 du coupleur HDLC doit extraire et éliminer les zéros de bourrage qui ont été insérés après cinq éléments «1» consécutifs dans la trame, en vue de recadrer les octets. Ce recadrage a pour référence le drapeau d'ouverture de la trame et est fonction du nombre de zéros de bourrage dans la trame. Il est contrôlé et éventuellement réinitialisé à la réception d'un drapeau. Il en est de même pour le décadrage à l'émission, sauf pour l'initialisation alors inutile.

Egalement avant tout traitement de la trame au niveau supérieur, il est nécessaire de s'assurer que la transmission de la trame à travers le réseau n'a pas engendré d'erreur. Ceci est détecté par l'examen de la séquence de contrôle de trame FCS. Si la séquence FCS n'est pas validée, le commutateur ignore la trame reçue. Le calcul de la séquence FCS est décrit au paragraphe 2.2.7 de l'Avis X.25 précité. On en retiendra qu'elle est obtenue à partir du polynôme générateur $x^{16}+x^{12}+x^5+1$ et qu'à la réception, la division de la suite des éléments binaires, reçus et recadrés, par le polynôme générateur doit donner un reste égal à 0001110100001111 en l'absence d'erreurs de transmission.

Pour chaque voie IT à 64 kbit/s, la partie de réception I du coupleur HDLC a donc pour fonctions essentielles la détection des drapeaux et par suite, des trames HDLC, l'extraction des zéros de bourrage et le recadrage des octets en vue de leur transmission à la mémoire tampon du commutateur ainsi qu'au niveau supérieur pour les octets le concernant, le comptage des octets afin de commuter et de lire convenablement les trames, ainsi que d'autres fonctions telles que la validation de la séquence de contrôle et la détection de fautes dans le cadrage. La partie d'émission 2 effectue les opérations réciproques pour former les trames HDLC à partir des paquets transmis par le commutateur. Ces dernières opérations sont notamment l'insertion des zéros de bourrage dans les trames, le tronçonnage des données en octets, l'émission des drapeaux entre les trames, la génération des deux octets de la séquence de contrôle de trame et la génération de séquences 01111111 permettant un abandon de trame sur ordre du commutateur. Selon l'invention, toutes ces fonctions sont réalisées pour chaque octet de chaque voie en mode-paquet à 64 kbit/s multiplexée dans le supermultiplex toutes les 125 µs.

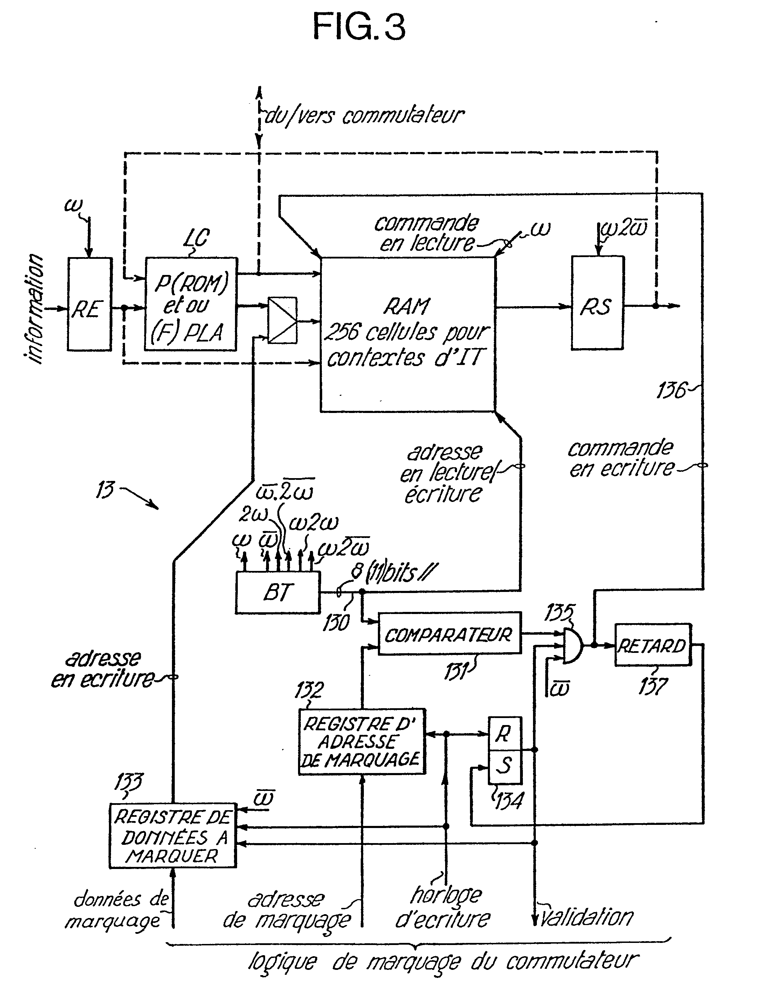

La Fig. 3 illustre schématiquement l'organisation de la partie de réception ou d'émission du coupleur HDLC. Chaque partie contient une logique combinatoire LC qui est essentiellement constituée par des mémoires mortes (P) ROM (en anglais «Programmable Read Only Memory») et/ou des réseaux logiques (F) PLA (en anglais «Field Programmable Logic Array») de préférence programmables par l'utilisateur, et contient des mémoires à accès aléatoire RAM (en anglais «Random Access Memory»). Les mémoires RAM contiennent 256 cellules qui mémorisent chacune le contexte d'une voie IT à 64 kbit/s. Le contexte contient des caractéristiques qui sont propres au traitement de l'octet de la voie IT et qui sont modifiées et enregistrées cycliquement toutes les 125 µs en vue du traitement de l'octet suivant de la même voie IT. Le nouveau contexte est enregistré à la fin du traitement de l'octet effectué par la logique combinatoire LC. En même temps la logique combinatoire LC délivre pour la partie de réception l'octet du paquet convenablement recadré et ne possèdant plus de zéros de bourrage à la mémoire tampon du commutateur, ou pour la partie d'émission une partie de l'octet avec des zéros de bourrage au démultiplexeur de sortie DEMULT.

Dans la Fig. 3 sont schématisés les moyens d'adressage 13 ainsi que les registres d'entrée RE et les registres de sortie RS que l'on retrouvera en association avec les différentes mémoires RAM. Les moyens d'adressage travaillent en temps partagé sur (32×8 =) 256 périodes successives de 488 ns, mais également en écriture et en lecture. En effet, l'écriture du nouveau contexte d'une même voie IT doit succéder à la lecture de l'ancien contexte afin que ce dernier ne soit pas effacé avant traitement.

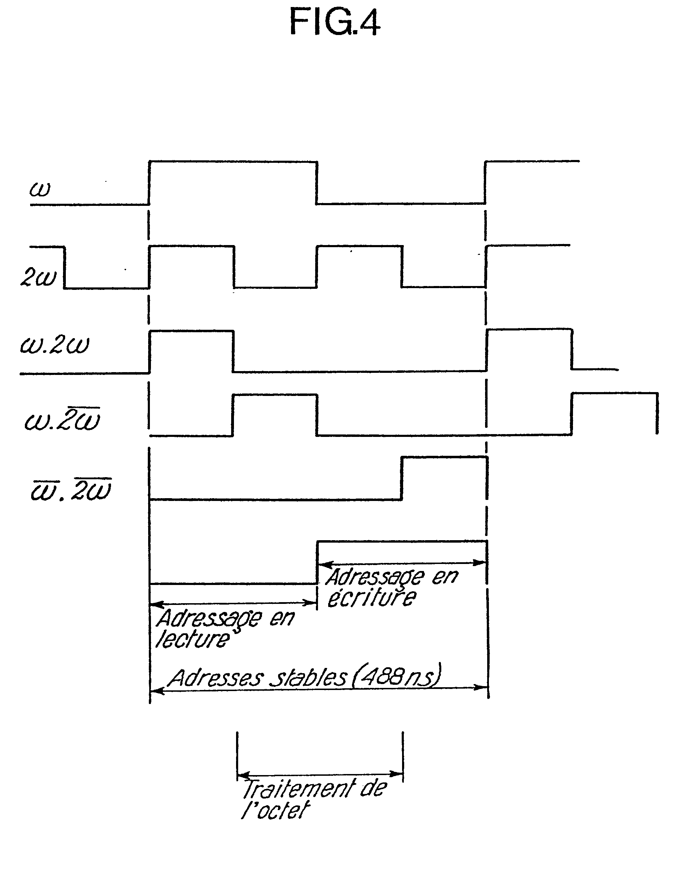

L'adressage des mémoires RAM sera décrit également en référence aux signaux logiques fournis par la base de temps BT et illustrés à la Fig. 4. Ces signaux sont un signal $\omega$ ayant la période de 488 ns, le signal complémentaire $\omega$, le signal $2\omega$ ayant la période de $488/2 = 244$ ns et les signaux produits $\omega$. $2\omega$, $\omega$. $2\omega$ et $\omega$. $\overline{2\omega}$.

Les adresses de lecture et d'écriture des mémoires RAM ont 8 bits pour le débit élémentaire de 64 kbit/s, ou ont 11 bits dans le cas où l'on désire traiter des voies à débit inférieur tel que 8 kbit/s. Chaque adresse est composé d'un mot de 3 bits représentatif du numéro de la voie MIC à 2048 kbit/s dans le supermultiplex à 8 voies MIC0 à MIC7, d'un mot de 5 bits représentatifs du numéro de la voie IT dans la voie MIC à 32 voies IT0 à IT31 et, éventuellement pour un débit inférieur à 8 kbit/s, d'un mot à 3 bits représentatif du numéro de l'octet à traiter dans la voie IT. Dans la suite, on ne considérera que des voies à traiter au débit de 64 kbit/s. L'adresse à 8 bits est fournie par un bus de sortie 130 de la base de temps locale BT et est appliquée au bus d'entrée d'adresse des mémoires RAM.

Pour un grand nombre de parties du contexte où une initialisation externe n'est pas nécessaire, le contexte s'initialise de lui-même et l'écriture dans la mémoire RAM est commandée systématiquement par le signal $\omega$; ceci est notamment le cas pour le comptage des zéros de bourrage et le comptage des octets dans la partie de réception du coupleur comme on le verra dans la suite.

Pour une minorité de parties du contexte, une initialisation externe par la logique de marquage du commutateur est nécessaire; un comparateur logique 131 est alors prévu comme montré à la Fig. 3. L'adresse à 8 bits sur le bus 130 est appliquée à un bus d'entrée du comparateur 131. L'autre entrée du comparateur 131 reçoit via un premier registre de marquage 132 l'adresse de marquage correspondante délivrée par la logique de marquage synchrone du commutateur au niveau paquet. Les données à marquer dans les mémoires RAM à l'adresse correspondante d'une voie IT sont enregistrées dans un second registre dit de données à marquer 133 sous la commande d'un signal d'horloge d'écriture de la logique de marquage, lequel est également appliqué à l'entrée R d'une bascule RS 134. La sortie du comparateur 131, la sortie de la bascule 134 et le signal complémentaire $\omega$ sont appliqués aux entrées d'une porte ET 135 qui délivre le signal de commande en écriture sur un fil 136 aux mémoires RAM et à un circuit de retard 137 de quelques dizaines de nanosecondes – durée nécessaire à l'écriture dans les mémoires RAM –, lorsque le comparateur 131 détecte l'égalité des adresses fournies par la base de temps BT et la logique de marquage du commutateur. La sortie du circuit de retard 137 est reliée à l'entrée S de la bascule 134 afin que sa sortie transmette un bit de validation à la logique de marquage. Le bit de validation à l'état zéro indique à la logique de marquage que le nouveau contexte a bien été enregistré dans les mémoires RAM. Dans le cas où le comparateur ne détecte pas l'égalité, le contexte n'est pas modifié; ceci correspond notamment à l'initialisation du nombre d'octets d'une trame, comme on le verra dans la suite.

Pour le traitement d'un octet pendant les deux créneaux centraux du signal $2\omega$ (Fig. 4), la lecture du contexte est d'abord effectuée d'une part en adressant en lecture pendant la première moitié de période du signal $\omega$ les mémoires RAM, le contexte étant alors enregistré dans les registres de sortie RS. Pendant le second quart de la période du signal $\omega$, les registres de sortie RS recevant le signal $\omega.2\omega$ fournissent le contexte qui sera traité en même temps que les informations entrantes provenant des registres d'entrée RE lus à partir du front montant du signal $\omega$. Ce traitement peut se poursuivre jusqu'au troisième quart de la période du signal $\omega$ au court duquel le nouveau contexte ainsi généré est écrit dans les mémoires RAM à la même adresse qui est fournie aux mémoires pendant les 488 ns définies par les deux niveaux «1» des signaux $\omega$ et $\omega$, l'écriture étant commandée par le signal $\omega$ appliqué à la porte 135 et au registre 133. Pour certains mots mémorisés, l'écriture est bloquée, par exemple pour la régénération des deux octets de la séquence de contrôle de trame ou pour le comptage d'octets, comme on le verra dans la suite. Dans tous ces cas, le comparateur 131 de la Fig. 3 n'est pas prévu et l'écriture n'est pas conditionnée par la comparaison effectuée par ce comparateur.

Pour d'autres mémoires RAM, il faut prévoir une initialisation externe; en émission par exemple, le nombre d'octets d'une trame est fourni par la logique de marquage du commutateur et doit être mémorisé pour chaque trame à émettre. L'adresse d'écriture est transmise par le registre de marquage 132 lorsque la sortie de la porte 135 est à l'état «1». Le bit de validation est remis à zéro après écriture dans les mémoires RAM.

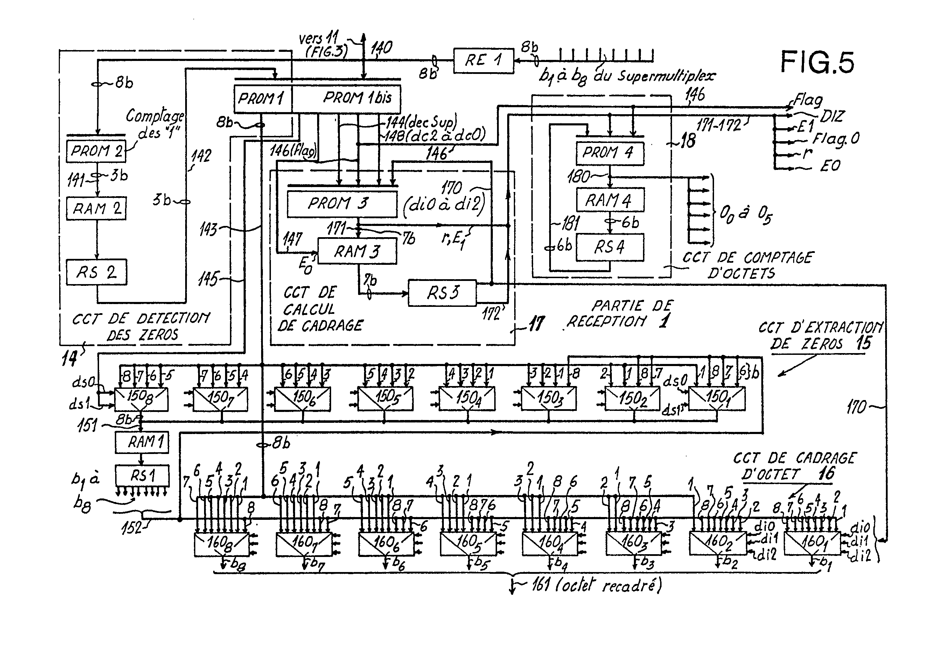

En référence à la Fig. 5, on décrit maintenant les moyens de la partie de réception 2 qui délivrent les octets recadrés et sans les zéros de bourrage. Ces moyens ont pour fonctions essentielles l'extraction de zéros, la détection des drapeaux et corrélativement la détection des octets des trames, et le comptage des octets. On rappelle que le traitement du champ de commande (gestion au niveau trame) et notamment la détection et la génération des numéros de séquence en émission N (S) et en réception N (R) ainsi que la détection de trames de service (trames dites de supervision S et trames dites non numérotées U) sont effectués par un automate au niveau trame associé au coupleur et n'appartiennent pas au cadre de l'invention.

Par ailleurs, on adoptera la convention suivante pour ce qui concerne l'ordre de transmission des bits d'un octet, en accord avec les paragraphes 2.2.8 et 6.1 de l'Avis X.25 précité. A l'émission, les éléments binaires sont numérotés $b_8$ à $b_1$; l'élément binaire $b_1$ est le bit de faible poids et est transmis en premier; l'élément binaire $b_8$ est le bit de fort poids et est transmis en dernier.

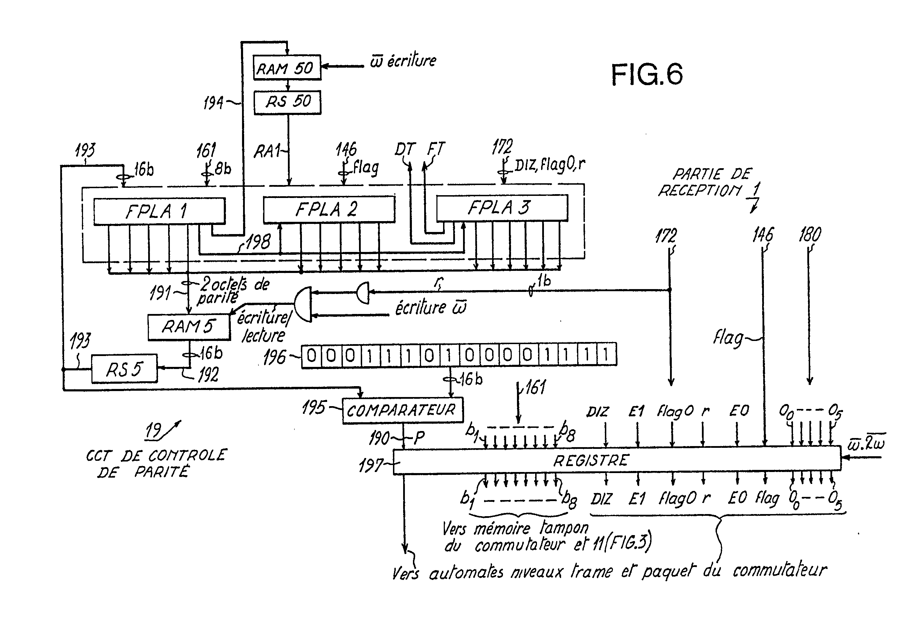

A l'entrée de la partie de réception 2, les octets avec leurs bits en parallèle sont transmis par le registre d'entrée RE1 – désigné par 10 dans la Fig. 2 – qui reçoit le signal $\omega$ de la base de temps BT. Le bus de sortie à 8 fils 140 du registre RE1 transmet les octets au multiplexeur 11 (Fig. 2) qui reçoit également par le bus 111 les octets sortant de la partie de réception – c'est-à-dire du registre 197 de la Fig. 6 comme on le verra dans la suite –, et également à une mémoire programmable qui est en pratique composée de deux mémoires programmables PROM1 et PROM1 bis. Chaque octet délivré par le registre RE1 est transmis à une mémoire programmable PROM2 qui est inclus dans un circuit de détection des zéros de bourrage 14.

La mémoire PROM2 effectue le comptage des bits à l'état «1» en queue de l'octet reçu. Le compte de ces bits est un mot de trois bits, tel que 010 lorsque les bits $b_7$ et $b_8$ sont à l'état «1» et le bit $b_6$ est à l'état «0», et est mémorisé dans une mémoire RAM2 à travers un bus à trois fils 141. La cellule de la mémoire RAM2 correspondant à la voie IT de l'octet en cours de traitement est lue 125 µs plus tard pour transmettre ledit compte sur un autre bus d'entrée à trois fils 142 de la mémoire PROM1 à travers un registre de sortie RS2 qui est associé à la mémoire RAM2. La mémoire PROM1 permet d'extraire les zéros de l'octet suivant et les ranger à la fin de cet octet dans les positions correspondant aux bits de poids fort $b_7$ et $b_8$. Par exemple, on suppose que l'octet reçu qui a donné lieu au compte de «1» en fin d'octet égal à 010, est l'octet «XXXXX011» – où X indique un bit quelconque – et que l'octet suivant est l'octet «11101111». Dans ce dernier octet, le bit $b_4$ est un zéro de bourrage car il succède à cinq «1»; il doit donc être extrait et rejeté en position de poids fort $b_8$. L'octet transmis par le bus de sortie d'information 143 de la mémoire PROM1 est égal alors à «11111110».

Les PROM1 et PROM1 bis délivrent également des informations complémentaires qui servent au traitement ultérieur de l'octet, tel que son cadrage. Pour réaliser ce cadrage, il est nécessaire de connaître le décalage supplémentaire dû aux zéros de bourrage à extraire insérés en fin d'octet. Le décalage supplémentaire est indiqué par un bit dec Sup transmis sur un fil de sortie 144 de la mémoire PROM1 bis. Le nombre de zéros à extraire est indiqué par deux bits ds1 et ds0 transmis sur deux fils de sortie 145 de la mémoire PROM 1 bis. Si aucun zéro n'est à extraire, dec Sup ainsi que ds1 et ds0 sont à l'état zéro. Dans le cas contraire, dec Sup est égal à «1» et le mot ds1 ds0 est égal à «01» ou à «10» lorsqu'un ou deux zéros de bourrage sont à extraire. Le cas où ds1 ds0 est égal à «11» n'existe pas puisqu'il n'y a jamais plus de deux zéros de bourrage dans un octet reçu.

Les huit bits de l'octet fourni par la mémoire PROM1 sont délivrés via le bus 143 à un circuit d'extraction de zéros 15. Le circuit 15 comprend

huit multiplexeurs $150_1$ à $150_8$ ayant chacun quatre entrées. Les bits de poids fort de l'octet précédemment reçu sont mémorisés sans zéros de bourrage dans une mémoire RAM1 associée à un registre de sortie RS1. Cet octet précédent est pris en compte pour l'extraction des zéros et le cadrage de l'octet reçu afin de ne point perdre de l'information. Les premières entrées – à gauche dans la Fig. 5 – des multiplexeurs $150_1$ à $150_8$ sont reliées aux fils transmettant respectivement les bits $b_1$ à $b_8$ de l'octet sur le bus 143. Les secondes entrées du multiplexeur $150_1$ et des multiplexeurs $150_2$ et $150_8$ reçoivent le bit $b_8$ sur le bus de sortie 152 du registre RS1 et les bits $b_1$ à $b_7$ sur le bus 143. Les troisièmes entrées des multiplexeurs $150_1$ et $150_2$ et des multiplexeurs $150_3$ à $150_8$ reçoivent les bits $b_7$ et $b_8$ sur le bus 152 et les bits $b_1$ à $b_6$ sur le bus 143. Les quatrièmes entrées des multiplexeurs $150_1$ à $150_3$ et des multiplexeurs $150_4$ à $150_8$ reçoivent des bits $b_6$ à $b_8$ sur le bus 152 et les bits $b_1$ à $b_5$ sur le bus 143. La sélection des entrées de même rang – compté de 1 à 4 à partir de la gauche de la Fig. 5 – des multiplexeurs est obtenue par l'adressage par le mot de décalage ds1 ds0 sur le bus 145. Ainsi, par exemple, lorsqu'un zéro de bourrage est à extraire ($ds_1\ ds_0 = 01$), les secondes entrées recevant le bit $b_8$ sur le bus 152 et les bits $b_1$ à $b_7$ sur le bus 143 sont sélectionnées dans les multiplexeurs $150_1$ à $150_8$ et, lorsque deux zéros de bourrage sont à extraire ($ds_1\ ds_0 = 10$), les troisièmes entrées des multiplexeurs $150_1$ à $158_8$ recevant les bits $b_7$ et $b_8$ sur le bus 152 et les bits $b_1$ à $b_6$ sur le bus 143 sont sélectionnées. Les huit, sept ou six bits de l'octet reçu sans les zéros de bourrage sur le bus 143 et, le bit de poids fort (ds1 ds0 = 01) ou les deux bits de poids fort (ds1 ds0 = 10) de l'octet précédemment reçu sur le bus 152 sont rangés respectivement dans les positions de poids fort et les positions de poids faible sur le bus de sortie à 8 fils 151 des multiplexeurs $150_1$ à $150_8$ et sont écrits dans la mémoire RAM1. L'octet est lu 125 µs plus tard dans la mémoire RAM1 et est transmis à travers le registre de sortie RS1 et le bus à 8 fils 152 vers les entrées d'un autre ensemble de huit multiplexeurs $160_1$ à $160_8$ en vue d'obtenir un octet convenablement cadré, comme on le verra dans la suite.

Pour recadrer les octets dans une trame HDLC, il convient également de détecter le ou les drapeaux précédant cette trame afin de référer le recadrage au drapeau d'ouverture. Cette détection de drapeau est effectuée par la mémoire PROM 1bis associée à la mémoire PROM1. Un fil de sortie 146 transmet un bit Flag à l'état zéro lorsqu'aucun drapeau n'est détecté dans l'octet reçu et l'octet précédent. Au contraire, Flag est égal à 1 lorsque l'octet précédent est un drapeau et dec Sup ainsi que ds0 et ds1 sont à zéro s'il n'y a pas de zéro à extraire. Cependant, Flag et dec Sup peuvent être égaux tous deux à un. C'est le cas par exemple lorsque l'octet précédemment reçu est «X0111111» et l'octet reçu est «0111110X»; il y a détection d'un Flag (Flag = 1), extraction de zéro de bourrage (ds1 ds0 = 01) à la position $b_7$ de l'octet reçu qui sera réémis 125 µs plus tard avec les deux bits de poids faible de l'octet reçu à ce moment là. La mémoire PROM 1bis détecte également toutes séquences contenant plus de six «1» consécutifs, ce qui se traduit par l'émission d'un bit d'erreur E0 sur un fil 147. Lors de la détection d'un drapeau sans extraction de zéros (Flag = 1 et dec Sup = 0), la mémoire PROM 1bis transmet sur un bus 148 un mot à trois bits dc2, dc1, dc0 qui est représentatif ici du décadrage du drapeau reçu. Ce mot est indiqué dans le tableau I suivant en fonction de l'octet reçu en cours de traitement et l'octet précédemment reçu.

Tableau I

| dc2 | dc1 | dc0 | octet précédent | octet reçu en cours de traitement |
|-----|-----|-----|-----------------|-----------------------------------|
| 0 | 0 | 0 | X X X X X X X X | 0 1 1 1 1 1 1 0 |
| 0 | 0 | 1 | X X X X X X X 0 | 1 1 1 1 1 1 0 X |
| 0 | 1 | 0 | X X X X X X 0 1 | 1 1 1 1 1 0 X X |
| 0 | 1 | 1 | X X X X X 0 1 1 | 1 1 1 1 0 X X X |
| 1 | 0 | 0 | X X X X 0 1 1 1 | 1 1 1 0 X X X X |
| 1 | 0 | 1 | X X X 0 1 1 1 1 | 1 1 0 X X X X X |
| 1 | 1 | 0 | X X 0 1 1 1 1 1 | 1 0 X X X X X X |
| 1 | 1 | 1 | X 0 1 1 1 1 1 1 | 0 X X X X X X X |
| 0 | 0 | 0 | 0 1 1 1 1 1 1 0 | X X X X X X X X |

Lorsque l'octet reçu est un octet de trame (Flag = 0), le mot de cadrage dc2, dc1, dc0 est tel que dc2 = 0 et dc1 dc0 = ds2 ds1; il en est de même lorsqu'un ou deux zéros sont à extraire (dec Sup = 1 et ds0 ds $\neq$ 00) et lorsqu'un drapeau a été détecté (Flag = 1).

Un circuit de calcul de cadrage 17 calcule le cadrage de l'octet. Le circuit 17 est composé d'une mémoire programmable PROM 3 qui reçoit dec Sup, Flag, et dc 2, dc 1, dc 0 de la mémoire PROM 1bis via les fils 144 et 146 et le bus 148 et également un mot di2 di1 di0 d'une mémoire RAM3 via son registre de sortie RS3 et un bus 170. La mémoire PROM3 effectue la réinitialisation du cadrage en fonction des drapeaux détectés ainsi que la détection de certaines erreurs. Toutes ces informations sont mémorisées dans la cellule correspondante de la mémoire RAM3 afin qu'elles soient utilisées pour le cadrage de l'octet suivant 125 µs plus tard. Le mot di2 di1 di0 est représentatif du cadrage précédemment enregistré. Lorsqu'un drapeau est détecté sans extraction de zéro, ce qui est indiqué par dec Sup = 0 et Flag = 1, la mémoire PROM3 compare le mot dc2 dc1 dc0 au mot di2 di1 di0. Si ces deux mots sont différents, la mémoire PROM3 fournit sur son bus de sortie 171 à la mémoire RAM3 un bit d'erreur E1 indiquant une erreur dans le cadrage des informations, et le nouveau mot de cadrage di2′ di1′ di0′ est celui de l'octet en cours de traitement: di2′ di1′ di0′ = dc2 dc1 dc0. Si aucun drapeau n'a été détecté ou si une extraction de zéros est réalisée en même temps Flag = 0, dec Sup = 0 ou 1, la mémoire PROM3 effectue l'addition suivante: di2 di1 di0 + dc2 dc1 dc0 = r di2′ di1′ di0′

et écrit son résultat dans la mémoire RAM3. Dans ce résultat, le bit r a l'état «1» indique que le décalage est plus grand que sept, ce qui commandera le blocage du compteur d'octets et la duplication d'un octet comme on le verra dans la suite. Le bit r est fourni au commutateur via un fil du bus 171 en vue d'inhiber l'écriture normale de l'octet et de la diffuser 125 μs plus tard quand cet octet est répété.

Les huit multiplexeurs $160_1$ à $160_8$ déjà mentionné constituent un circuit de cadrage 16 de l'octet dont certains bits sont d'une manière générale pour partie les bits de poids faible de l'octet qui est en cours de traitement et convoyé sur le bus de sortie 143 de la mémoire PROM1 et pour partie les bits de poids fort de l'octet écrit 125 μs auparavant dans la mémoire RAM1. Les multiplexeurs $160_1$ à $160_8$ comportent chacun huit entrées dont celles de même rang – compté de 1 à 8 à partir de la droite de la Fig. 5 – sont adressées par le mot de cadrage di2 di1 di0 qui représente en code binaire ledit rang moins un et qui a été calculé 125 μs auparavant par la mémoire PROM3 et transmis maintenant par le registre RS3 à travers le bus 170. Afin qu'il n'y ait point de perte d'information, lorsque di = 0, l'octet transmis par le bus de sortie 161 à 8 fils des multiplexeurs $160_1$ à $160_8$ est en fait l'octet précédemment écrit dans la mémoire RAM1.

Les bits de sortie des multiplexeurs $160_1$ à $160_8$ sont respectivement les bits $b_1$ à $b_8$ de l'octet recadré sans les zéros de bourrage. Les premières entrées – à droite sur la Fig. 5 – des multiplexeurs $160_1$ à $160_8$ sont reliées respectivement aux fils $b_1$ à $b_8$ du bus 152 du registre RS1. Les secondes entrées des multiplexeurs $160_1$ à $160_8$ sont reliées aux fils $b_2$ à $b_8$ du bus 152 et au fil de poids faible $b_1$ du bus 143, les troisièmes aux fils $b_3$ à $b_8$ du bus 152 et aux fils $b_1$ et $b_2$ du bus 143, et ainsi de suite jusqu'aux huitièmes entrées des multiplexeurs $160_1$ à $160_8$ qui sont reliées au fils $b_8$ du bus 152 et aux fils $b_1$ à $b_7$ du bus 143. A titre d'exemple, le tableau II suivant détaille les différentes opérations effectuées pour le cadrage des octets d'une même voie IT à 64 kbit/s par le bloc-diagramme de la Fig. 5.

## Tableau II

0 094 322

| Octet reçu (140) | | bits «1» en queue d'octet | | Flag (146) | dec Sup (144) | dc2 dc1 dc0 (148) | di2 di1 di0 (170) | di2' di1' di0' (171) | Octet (143) | | Octet (152) | | Octet (151) | | Octet émis (161) | |
|---|---|---|---|---|---|---|---|---|---|---|---|---|---|---|---|---|
| $b_8$ | $b_1$ | ancien (142) | nouveau (141) | | | | | | $b_8$ | $b_1$ | $b_8$ | $b_1$ | $b_8$ | $b_1$ | $b_8$ | $b_1$ |
| 01111110 | | 000 | 000 | 1 | 0 | 000 | 000 | 000 | 01111110 | | XXXXXXXX | | 01111110 | | = octet 152 | |
| 11011111 | | 000 | 010 | 0 | 1 | 001 | 000 | 001 | 01111111 | | 01111110 | | 11111110 | | 01111110 | |
| 11110111 | | 010 | 100 | 0 | 1 | 001 | 001 | 010 | 01111111 | | 11111110 | | 11111111 | | 11111111 | |
| 01111101 | | 100 | 000 | 0 | 1 | 010 | 010 | 100 | 00111111 | | 11111111 | | 11111111 | | 11111111 | |
| 01011111 | | 000 | 000 | 0 | 1 | 001 | 100 | 101 | 00111111 | | 11111111 | | 01111111 | | 11111111 | |
| 10111110 | | 000 | 001 | 0 | 1 | 001 | 101 | 110 | 01111110 | | 01111111 | | 11111100 | | 11110011 | |
| 11001111 | | 001 | 010 | 0 | 1 | 001 | 110 | 111 | 01101111 | | 11111100 | | 11011111 | | 10111111 | |
| 11110111 | | 010 | 100 | 0 | 1 | 001 | 111 | r=1,000 | 01111111 | | 11011111 | | 11111111 | | 11111111+r=1 | |
| 00111101 | | 100 | 000 | 0 | 1 | 001 | 000 | 001 | 00011111 | | 11111111 | | 00111111 | | 11111111 | |
| 01010000 | | 000 | 000 | 0 | 0 | 000 | 001 | 001 | 01010000 | | 00111111 | | 01010000 | | 00011111 | |
| | | | | | | | | | | | | | | | | |
| 11111100 | | 000 | 110 | 0 | 0 | 000 | 001 | 001 | 11111100 | | XXXXXXXX | | 11111100 | | 0XXXXXXX | |
| 11111100 | | 110 | 110 | 1 | 0 | 001 | 001 | 001 | 11111100 | | 11111100 | | 11111100 | | 01111110 | |
| 10111110 | | 110 | 001 | 1 | 1 | 001 | 001 | 010 | 01111110 | | 11111100 | | 11111101 | | 01111110 | |
| 01000000 | | 001 | 000 | 0 | 0 | 000 | 010 | 010 | 01000000 | | 11111101 | | 01000000 | | 00111111 | |
| | | | | | | | | | | | | | | | XX010000 | |

Des cas particuliers sont montrés dans les tableaux III et IV suivants:

## Tableau III

| Octet reçu (140) b8...b1 | bits «1» en queue d'octet ancien (142) | nouveau (141) | Flag (146) | dec Sup (144) | dc2 dc1 dc0 (148) | di2 di1 di0 (170) | di2' di1' di0' (171) | Octet (143) | Octet (152) | Octet (151) | Octet émis (161) |
|---|---|---|---|---|---|---|---|---|---|---|---|
| 11100111 | 011 | 011 | 1 | 0 | 100 | 100 | 100 | 11100111 | 11100111 | 11100111 | 01111110 |
| 00111111 | 011 | 000 ici erreur ou plus de 6'1' consécutifs | 0 | 0 | 000 | 100 | 100 | 00111111 | 11100111 | 00111111 | erreur + 11111110 |
| 00111111 | 000 | 000 | 1 | 0 | 111 | 100 | 111 + erreur réinitialitsation | 00111111 | 00111111 | 00111111 | 01111110 |
| 11111110 | XXX | 111 + erreur | 0 | 0 | 000 | XXX | XXX | 11111110 | XXXXXXXX | 11111110 | dépend de di2 di1 di0 |
| 11100111 | 011 | 011 | 1 | 0 | 100 | 101 | 100 + erreur réinitialisation | 11100111 | 1110XXXX | 11100111 | 01111110 |

## Tableau IV

| Octet reçu bus 140 b8...b1 | bits «1» en queue d'octet ancien (142) | nouveau (143) | Flag (146) | dec Sup (144) | dc2 dc1 dc0 (148) | di2 di1 di0 (170) | di2' di1' di0' (171) | Octet (143) | Octet (152) | Octet (151) | Octet émis (161) |
|---|---|---|---|---|---|---|---|---|---|---|---|
| 10111110 | 101 | 001 | 0 | 1 | 010 | 111 | r = 1,001 | 00111111 | 11111XXX | 11111111 | r = 1 et 01111111 ↑ erroné mais octet non pris en compte (car r=1) |
| 01010011 | 001 | 000 | 0 | 0 | 000 | 001 | 001 | 01010011 | 11111111 | 01010011 | 11111111 |
| 00010000 | 000 | 000 | 0 | 0 | 000 | 001 | 001 | 00010000 | 01010011 | 00010000 | 00101001 |

D'après le tableau IV, il apparaît que le seul cas où le mot émis vers le commutateur est erroné, est celui où di = 7; di' = 7; di' = 7 + 2 ≡ 1 modulo 8.
Il manque alors 1 bit pour former 1 octet complet; ce bit est obtenu au traitement suivant et envoyé lorsque r ≠ 1.

Comme déjà dit, la mémoire PROM3 délivre des informations qui seront nécessaires au traitement des trames HDLC au niveau du commutateur. Ces informations sont mémorisées dans la mémoire RAM3 et retransmises 125 μs plus tard à travers le registre RS3 et un bus à cinq fils 172. Elles sont les suivantes:

– un bit DIZ qui est à l'état «1» pour indiquer l'absence de décalage (dc2 = dc1 = dc0 = 0) et qui est à l'état «0» pour indiquer qu'un décalage doit être effectué 125 μs plus tard;
– un bit d'erreur E1 – délivré en fait par un fil de sortie du bus 171 de la mémoire PROM3 – qui est à l'état «1» pour indiquer une erreur dans le cadrage des octets reçus, telle que correspondant à deux drapeaux reçus ayant un zéro commun: 011111101111110; en d'autres termes, le bit E1 sanctionne le fait qu'entre deux trames le cadrage di varie alors qu'il doit rester constant puisque les drapeaux occupent exactement chacun l'emplacement d'un octet;
– un bit Flag 0 qui est à l'état «1» pour indiquer la détection d'un drapeau dans l'octet précédemment reçu;
– le bit de retenue r déjà cité – délivré en fait par un fil du bus de sortie 171 de la mémoire PROM3 – qui est à l'état «i» lorsque di' passe de 6 à 8 ou de 7 à 9 ou de 7 à 8 par extraction de septième et huitième zéros ou de huitième et neuvième zéros où d'un huitième zéro respectivement dans les cas où pour l'octet reçu, un ou deux zéros sont à extraire; comme déjà dit, le bit r évite la duplication d'un octet reçu par le commutateur;
– le bit E0 qui est transmis de la PROM 1bis vers la mémoire RAM3 et qui est à l'état «1» pour indiquer une erreur telle que la transmission de plus de six «1» consécutifs.

Un circuit de comptage 18 montré à la Fig. 5 reçoit le bit r sur le bus 171, les bits DIZ et Flag 0 sur le bus 172 et le bit Flag sur le fil 146, ce dernier indiquant la détection d'un drapeau pour le traitement en cours. Le circuit 18 comprend une mémoire PROM4 qui détecte le début et la fin des trames – y compris les deux octets de la séquence FCS –, une mémoire RAM4 qui mémorise le compte d'octets à 6 bits $0_0 - 0_5$ transmis par le bus de sortie 180 de la mémoire PROM4 pour chaque voie IT à 64 kbit/s, et un registre de sortie RS4 associé à la mémoire RAM4 qui transmet le compte mémorisé 125 μs auparavant à l'entrée de la mémoire PROM4 via un bus à 6 fils 181. Le drapeau d'ouverture d'une trame est détecté par la mémoire PROM4 lorsque $\overline{Flag}$.Flag 0 = 1. Puis pour chaque octet de trame, le compteur de la mémoire PROM4 est incrémenté de l'unité, sauf dans le cas où au moins huit zéros de bourrage ont été extraits (r = 1), le compte étant momentanément bloqué pour l'octet en cours de traitement. Le drapeau de fermeture d'une trame est signalé par Flag.$\overline{Flag\ 0}$ = 1. Puis jusqu'à la trame suivante, les drapeaux sont transmis, ce qui est indiqué par Flag.Flag 0 = 1, et le compte reste inchangé. Le blocage du compte se traduit par une recopie de ce compte $0_0$ à $0_5$ dans la cellule correspondante de la mémoire RAM4. On notera que le cas DIZ = 1 et r = 1 est impossible puisque pour DIZ = 1 (di = 0), di+dc n'est jamais supérieur ou égal à 8, le nombre de zéros à extraire par octet n'étant jamais supérieur à 2; le cas DIZ = 0 et r = 1 est également impossible lorsque l'octet reçu correspond à la fin d'une trame (Flag = 1 et Flag 0 = 0) ou à l'intervalle entre deux trames (Flag = Flag 0 = 1). Le tableau V suivant résume les différentes opérations précédentes effectuées par la mémoire PROM4.

Tableau V

| | | | | | | | | | | | | |
|---|---|---|---|---|---|---|---|---|---|---|---|---|
| Flag | 0 | 0 | 1 | 1 | 0 | 0 | 0 | 1 | 0 | 0 | 1 | 1 |
| Flag 0 | 1 | 0 | 0 | 1 | 1 | 0 | 0 | 1 | 1 | 0 | 0 | 1 |
| DIZ | 0 | 0 | 0 | 0 | 1 | 1 | 1 | 1 | 0 | 0 | 0 | 0 |
| r | 0 | 0 | 0 | 0 | 0 | 0 | 0 | 0 | 1 | 1 | 1 | 1 |
| Opération éffectuée sur le compte $0_0$ à $0_5$ | M1 | IN | B | B | R0 | IN | IN | B | R0 | B | IM | IM |

Dans le Tableau V, IN, M1, R0 et B indiquent l'incrémentation d'une unité, la mise à un, la remise à zéro et le blocage du compte d'octet $0_0$ à $0_5$ respectivement et IM indique une combinaison de Flag, Flag 0, DIZ et r impossible.

La Fig. 6 détaille le circuit de contrôle de parité 19 inclus dans la partie de réception 1. Le circuit 19 a pour but de régénérer la séquence de contrôle de trame FCS afin de valider chaque trame reçue. Cette validation est indiquée par un bit dit de parité P à l'état «1» qui est transmis par la sortie 190 du circuit 19.

Le circuit 19 est également structuré comme montré à la Fig. 3. Il comprend une logique combinatoire d'entrée qui est composée ici de trois réseaux logiques programmables FPLA1 à FPLA3, une mémoire RAM5 recevant via un bus 191 les deux octets de parité calculés par les réseaux FPLA1 à FPLA3, et un registre de sortie RS5. Les 16 bits de parité de la voie IT considérée sont transmis par un bus de sortie 192 de la mémoire RAM5 au registre RS5 qui les restitue via un bus 193 à l'entrée des réseaux FPLA1 à FPLA3. Les réseaux logiques FPLA1 à FPLA3 reçoivent également l'octet recadré sans les zéros de bourrage via le bus 161, et notamment le bit Flag via le fil 146 et les bits DIZ et r, Flag 0 via le bus 172. Un bit RA1 est fourni via un bus 194 à une mémoire RAM50 associée à un registre de sortie RS50 qui, en début de trame, délivre 125 μs plus tard le bit RA1 aux réseaux FPLA1 à FPLA3 pour remettre à «1» les bits des deux octets de parité. Un bus 198 retransmet les sommes partielles calculées dans le premier réseau vers les réseaux logiques suivants. Le troisième réseau FPLA3 délivre deux bits DT et FT qui indiquent le début et la fin de chaque trame en fonction des états des bits Flag, Flag 0 et DIZ.

Le calcul de la séquence FCS est effectué en fonction des deux anciens octets de parité mémorisés 125 µs auparavant par la mémoire RAM5 et de l'octet en cours de traitement reçu sur le bus 161. Au début de la trame (DT = 1), les bits des deux octets de parité enregistrés dans la mémoire RAM5 ont tous été mis à «1» par le signal RA1. A chaque octet de trame pour la voie IT considérée, transmis par le bus 161, les réseaux effectuent en parallèle sur 8 bits une opération équivalente à une division bit à bit de cet octet par le polynôme générateur $x^{16}+x^{12}+x^5+1$ qui est obtenu à partir des deux octets de parité. En fin de trame, lors de la réception du second octet de la séquence FCS, les deux octets de parité doivent être égaux au reste 0001110100001111. La validation de trame est effectuée par un comparateur 195 qui reçoit pour chaque octet, les deux octets de parité mémorisés dans la mémoire RAM5, via la registre de sortie associé RS 5 et le bus 193, et ledit reste qui est dans une mémoire morte 196. La trame est validée, lorsqu'en fin de trame (FT = 1), les deux paires d'octets comparées sont identiques, ce qui se traduit par l'émission d'un bit P à l'état «1» par la sortie 190 du comparateur 195. On notera que dans le cas où le bit dit de retenue r est égal à «1», ce qui correspond au blocage de la transmission d'octet, l'écriture de la mémoire RAM5 est bloquée par le bit r délivré par le bus 172, le contenu de la cellule de mémoire correspondante restant inchangé.

Pour chaque octet traité dans la partie de réception 1, dans un registre tampon de sortie 197 sont enregistrées en parallèle les informations suivantes: le bit de parité P via la fil 190, les huit bits de l'octet recadré via le bus 161, les bits DIZ, E1, Flag 0, r et E0 via le bus 171 – les bits E0, r et E1 pouvant être fournis directement par le fil 147 et le bus 171 (Fig. 5) au registre 197 en vue d'éviter leur mémorisation dans la mémoire RAM3 – le bit Flag via le fil 146 et les six bits $0_0$ à $0_5$ du compte d'octets via le bus 180. L'octet recadré du bus 161 est transmis à travers le multiplexeur de sortie 11 (fig. 2) vers la mémoire tampon du commutateur tandis que les autres informations sont transmises aux automates du commutateur pour la gestion des trames au niveau paquet.

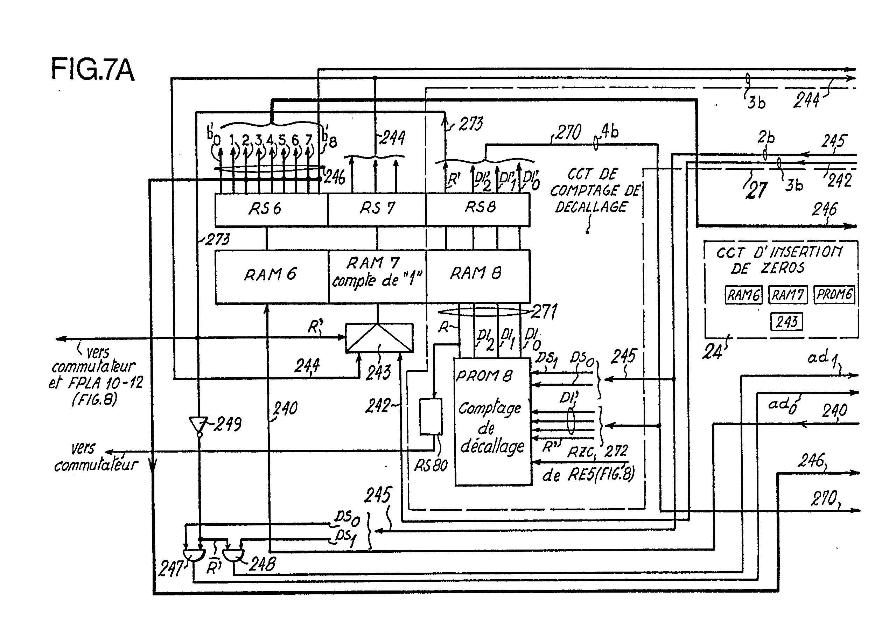

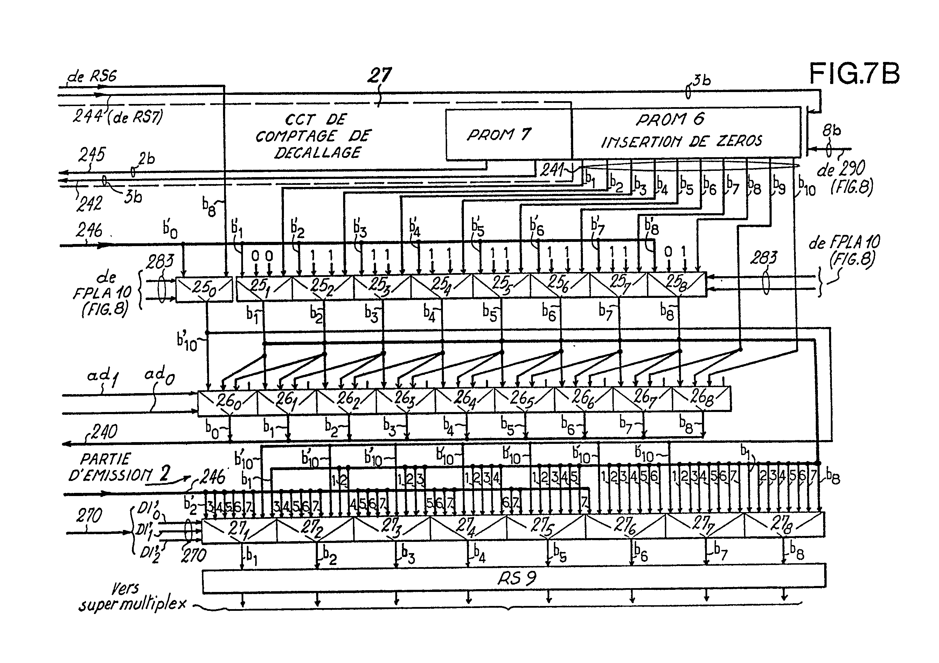

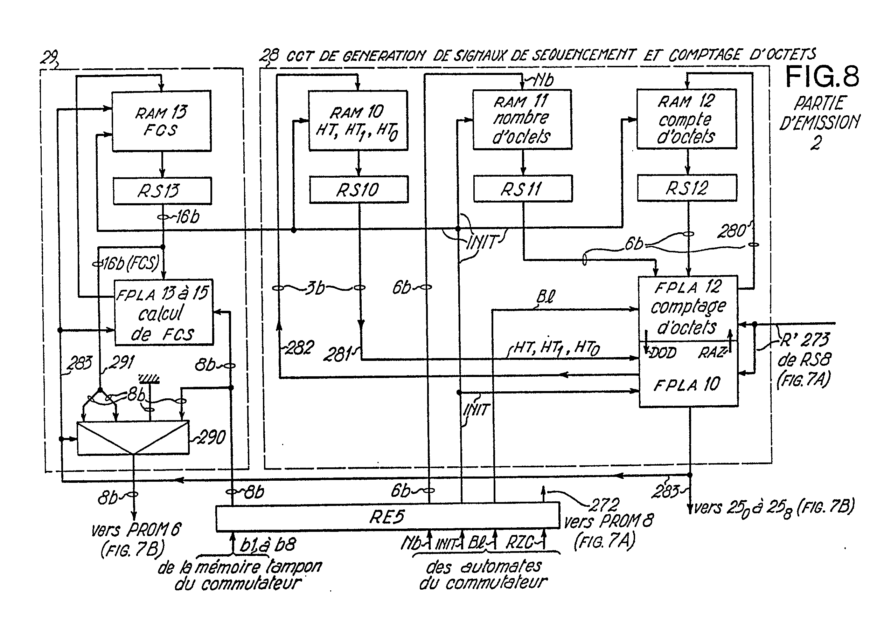

La partie d'émission 2 du coupleur HDLC est maintenant décrite en référence aux Figs. 7 et 8. La Fig. 7 est composée des Fig. 7A et 7B, la Fig. 7A étant à placer à gauche de la Fig. 7B. Dans la partie d'émission, un registre d'entrée RE5 (Fig. 8) reçoit de la mémoire tampon du commutateur les octets de trame, à l'exception des deux octets de la séquence de contrôle de trame FCS, et des mémoires de l'automate du commutateur un mot de six bits Nb qui indique le nombre exact d'octets de la trame moins les deux octets de la séquence FCS, un bit INIT qui initialise le début d'émission de la trame, un bit BI pour le blocage de l'incrémentation du compte d'octets transmis, et éventuellement un bit RZC de réinitialisation du cadrage d'octet. L'octet pour chaque voie IT à 64 kbit/s – ou l'un des octets de la séquence de contrôle de trame comme on le verra dans la suite – est transmis rapidement à travers un multiplexeur 290 à une mémoire PROM6 d'un circuit d'insertion de zéros de bourrage 24 (fig. 7).

En se reportant à la Fig. 7, le circuit 24 comprend une mémoire RAM6 dont le bus d'entrée 240 à 9 fils est relié au bus de sortie 241 à 10 fils de la mémoire PROM6 à travers deux ensembles à neuf multiplexeurs chacun, $25_0$ à $25_8$ et $26_0$ à $26_8$. Une autre mémoire PROM7 coopérant avec la mémoire PROM6 – ces deux mémoires jouant un rôle réciproque aux mémoires PROM1 et PROM 1bis de la partie de réception 1 (Fig. 5) – transmet sur un bus de sortie 242 le nombre de bits «1» en queue de l'octet reçu après insertion de zéros de bourrage – c'est-à-dire en queue du mot à 10 bits sur le bus 241 – vers une mémoire RAM7 à travers un multiplexeur 243. Le nombre de bits «1» en queue de l'octet précédent est lu dans la mémoire RAM7 et délivré par un registre de sortie RS7 associé via un bus 244 aux mémoires PROM6 et PROM7 afin que celles-ci insèrent un zéro de bourrage pour chaque sortie détectée de cinq «1» consécutifs. Le nombre $DS_1 DS_0$ de zéros de bourrage insérés qui est inférieur ou égal à deux, est fourni à travers un bus à deux fils 245 par la mémoire PROM7 à une mémoire PROM8 (ou réseau FPLA) d'un circuit de comptage de décalage 27.

Le circuit 27 joue un rôle réciproque au circuit de calcul de cadrage 17 de la partie de réception 1. Il comprend une mémoire RAM8 et un registre de sortie associé RS8 à 4 bits. Pour chaque octet, la mémoire PROM8 calcule un mot de cadrage R $DI_2 DI_1 DI_0$ qui résulte de l'addition du mot de cadrage R' $DI'_2 DI'_1 DI_0$ mémorisé dans la mémoire RAM8 125 µs auparavant et délivré par un bus de sortie 270 du registre RS8. Le mot de cadrage ainsi calculé est fourni par la mémoire PROM8 et est mémorisé dans la RAM8 via un bus à quatre fils 271. Le bit de retenue R délivré par la mémoire PROM8 est mémorisé dans un registre de sortie RS80 qui transmet au niveau supérieur dans le commutateur le bit R sous la commande du signal $\overline{\omega\,2\omega}$ afin que le commutateur ne fournisse pas d'octet au traitement suivant de la voie IT, 125 µs plus tard. La mémoire PROM8 reçoit éventuellement le bit de réinitialisation de cadrage RZC du registre RE5 (Fig. 8) à travers un fil 272.

Par ailleurs, l'autre bus d'entrée 244 du multiplexeur 243 reçoit l'ancien nombre de bits «1» en queue de l'octet précédent à partir du registre RS7. L'un des nombres sur les bus 242 et 244 est sélectionné dans le multiplexeur 243 pour sa mémorisation dans la mémoire RAM7 en fonction de l'état du bit R' qui a été mémorisé 125 µs auparavant dans la mémoire RAM8 et qui est convoyé par un fil 273 du bus 270.

Dans le premier ensemble de multiplexeurs $25_0$ à $25_8$, chaque multiplexeur présente quatre entrées qui sont sélectionnées par deux signaux sur un bus 283 dont l'obtention sera décrite plus loin en référence à la Fig. 8. Les premières entrées – à gauche dans la Fig. 7B – des multiplexeurs $25_0$ à $25_8$ sont reliées aux neuf fils du bus de sortie 246 du registre de sortie RS6 associé à la mémoire RAM6 et correspondent aux neuf bits $b_0$ à $b_8$ précédemment mémorisés; les secondes entrées des multiplexeurs $25_1$ à $25_8$ sont respectivement en permanence aux états correspondants des bit 01111110 d'un drapeau; les troisièmes entrées des multiplexeurs $25_1$ à $25_8$ sont respectivement en permanence aux états 01111111 et sont sélectionnées lorsque la voie IT correspondante est dans l'état d'abandon de trame, conformément au paragraphe 2.2.12.2 de l'Avis précité X.25; les quatrièmes entrées – à droite dans la Fig. 7B – des mutiplexeurs $25_0$ à $25_8$ sont reliées respectivement au fil du bus de sortie 246 du registre RS6 qui transmet le dernier bit $b_8$ de poids fort précédemment mémorisé – lequel est le bit $b_9$ de l'octet précédent sur le bus 241 lorsqu'un seul zéro de bourrage a été inséré ou le bit $b_{10}$ de l'octet précédent sur le bus 241 lorsque deux zéros de bourrage ont été insérés –, et aux fils du bus de sortie 241 de la mémoire PROM6 qui transmettent les huit premiers bits $b_1$ à $b_8$ de l'octet avec les zéros de bourrage éventuellement.

Les multiplexeurs $26_0$ à $26_8$ du second ensemble comportent également chacun quatre entrées qui sont sélectionnées par deux signaux $ad_0$ et $ad_1$. Au moyen de deux portes ET 247 et 248 qui reçoivent le bit $\overline{R'}$ à travers le fil 273 et un inverseur 249, et les bits $DS_0$ et $DS_1$ sur le bus 245, les signaux $ad_0$ et $ad_1$ sont obtenus selon les relations suivantes:

$$ad_0 = \overline{R'} \times DS_0 \text{ et } ad_1 = \overline{R'} \times DS_1$$

Le bus de sortie à neuf fils des multiplexeurs $26_0$ à $26_8$ est relié au bus d'entrée 240 de la mémoire RAM6. Tant que R' = 0, c'est-à-dire tant que pas plus de sept zéros de bourrage ont été insérés par rapport au dernier bit RZC = 1 reçu ou à la dernière retenue R = 1, les premières entrées des multiplexeurs $26_0$ à $26_8$ sont sélectionnées et délivrent à la mémoire RAM6 le bit $b'_{10}$ sortant du multiplexeur $25_0$ et les bits $b_1$ à $b_8$ sortant des multiplexeurs $25_1$ à $25_8$ lorsqu'aucun zéro de bourrage n'est inséré ($DS_1 DS_0 = 00$); les secondes entrées des multiplexeurs $26_0$ à $26_8$ sont sélectionnées et délivrent à la mémoire RAM6 les bits $b_1$ à $b_9$ de l'octet en cours de traitement lorsqu'un zéro de bourrage est inséré ($DS_1 DS_0 = 01$), les bits $b_1$ à $b_8$ étant fournis par les multiplexeurs $25_1$ à $25_8$ et le bit $b_9$ par un fil du bus 241 de la mémoire PROM6; si deux zéros de bourrage ont été insérés ($DS_1 DS_0 = 10$), les troisièmes entrées des multiplexeurs $26_0$ à $26_8$ sont sélectionnées et délivrent à la mémoire RAM6 les bits $b_2$ à $b_8$ de l'octet en cours de traitement fournis par les multiplexeurs $25_2$ à $25_8$ et les bits $b_9$ et $b_{10}$ de poids fort fournis par deux fils respectifs – à droite dans la Fig. 7B – du bus 241 de la mémoire PROM6. R' = 1 indique que le nombre de zéros de bourragea été supérieur à huit pour le traitement précédent et que le bit R a été transmis via le registre RS80 au commutateur qui 125 µs plus tard n'envoie pas huit bits de trame au registre RE5 (Fig. 8). Le bit R est mémorisé dans le contexte de la voie IT au niveau du commutateur qui bloque donc l'émission d'un octet à partir de la mémoire tampon pour que l'octet de la voie IT correspondant aux huit ou neuf bits restants mémorisés dans la mémoire RAM6 soit transmis; dans ce cas, les huit bits de poids faible qui sont transmis, ainsi que le bit de poids fort qui a été précédemment mémorisé sont rechargés dans la mémoire RAM6 à travers les multiplexeurs $25_0$ à $25_8$ et $26_0$ à $26_6$, et le nombre de «1» en queue d'octet précédemment mémorisé est de nouveau écrit dans la mémoire RAM7 grâce à la sélection du bus 244 par le multiplexeur 243.

On voit que les multiplexeurs $26_0$ à $26_8$ ont un rôle réciproque aux multiplexeurs $150_1$ à $150_8$ de la partie de réception et insèrent les zéros de bourrage. Les multiplexeurs $25_0$ à $25_8$ sélectionnent neuf anciens ou nouveaux bits ou éventuellement sélectionnent un drapeau ou un octet de trame ou sont bloqués.

La partie d'émission 2 comprend un troisième ensemble de multiplexeurs $27_1$ à $27_8$ qui ont un rôle réciproque aux multiplexeurs $160_1$ à $160_8$ de la partie de réception afin d'extraire des octets de trame éventuellement avec des zéros de bourrage. Leur bus de sortie est relié à un registre de sortie RS9 transmettant les octets décadrés, comme les reçoit la partie de réception. Chaque multiplexeur $27_1$ à $27_8$ comprend huit entrées qui sont sélectionnées par le mot de décalage $DI'_2 DI'_1 DI'_0$ sur le bus 270.

Par exemple, lorsqu'aucun zéro de bourrage n'a été inséré dans l'octet en cours de traitement ($DS_1 DS_0 = 00$; DI' = 0 et R' = 0), les multiplexeurs $27_1$ à $27_8$ ont des premières entrées – à droite dans la Fig. 7B – reliées aux sorties des multiplexeurs $25_1$ à $25_8$ et délivrent l'octet $b_1$ à $b_8$ reçu par la mémoire PROM6. Si un ou deux zéros de bourrage sont à insérer dans l'octet suivant, les multiplexeurs $27_1$ à $27_8$ transmettent comme précédemment les bits $b_1$ à $b_8$; les bits $b_9$ ou $b_8$ et $b_{10}$ sont mémorisés dans la mémoire RAM6 via le bus 240 en vue de leur émission en tant que bit de poids faible avec les bits $b_1$ à $b_7$ ou $b_1$ à $b_6$ du troisième octet suivant.

Pour ce troisième octet, si deux zéros de bourrage ont été insérés depuis la dernière retenue (R = 1) ce qui est représenté par le mot R' $DI'_2 DI'_1$ $DI'_0 = RDI_2 DI_1 DI_0 + DS_1 DS_0$ modulo 8 égal à 0010 et si un zéro de bourrage doit être inséré ($DS_1 DS_0 = 01$), les multiplexeurs $27_1$ à $27_8$ ont des secondes entrées recevant le bit $b'_7$ sortant du registre RS6 sur le bus 246, le bit $b'_{10}$ sortant du multiplexeur $25_0$ et les bits $b_1$ à $b_6$ sortant des multiplexeurs $25_1$ à $25_6$; le bit $b'_{10}$ est en fait l'ancien bit $b'_8$ qui n'est autre que le dixième bit $b_{10}$ délivré par la mémoire PROM6 et enregistré 125 µs auparavant pour l'insertion de deux zéros de bourrage. Les entrées des multiplexeurs $27_1$ à $27_8$ sont sélectionnées par le nombre $DI'_2 DI'_1 DI'_0$ de zéros déjà insérés depuis la dernière retenue (R = 1) (ou le dernier RZC = 1) tandis que les entrées

des multiplexeurs $26_0$ à $26_8$ sont sélectionnées par les signaux $ad_1$ et $ad_0$ dépendant de $\overline{R'}$ et $DS_1 DS_0$ grâce aux portes 247 et 248; dans l'exemple précédent, les bits $b_7$ (en fait $b_9$ par rapport à la mémoire PROM6) et $b'_{10}$ proviennent de l'octet précédent dans la mémoire RAM6 et les bits $b_1$ à $b_6$ proviennent de la mémoire PROM1 via les multiplexeurs $25_1$ à $25_6$.

Les décalages d'octets se poursuivent comme précédemment jusqu'à ce que six ou sept zéros de bourrage soient insérés; par exemple, après sept zéros de bourrage, les multiplexeurs $27_1$ à $27_8$ ont des septièmes entrées sélectionnées – à gauche dans la Fig. 7B – et transmettent les bits $b'_2$ à $b'_7$ provenant de la mémoire RAM6 via le bus 246, le bit $b'_{10}$ via le bus 246 et le multiplexeur $25_0$ et le bit $b_1$ via le bus 241 et le multiplexeur $25_1$.

Le traitement s'effectue comme ci-dessus jusqu'à ce que la mémoire PROM8 délivre un bit R à l'état «1» qui est mémorisé dans la mémoire RAM8 et transmis au commutateur via le registre RS80, et simultanément le mot $DI_2 DI_1 DI_0 = 000$ ou 001 qui est mémorisé dans la mémoire RAM8. Au traitement suivant 125 µs plus tard, le registre RE5 (Fig. 8) ne reçoit pas d'octet $b_1$ à $b_8$ de la mémoire tampon du commutateur, et le commutateur fournit RZC = 1 à la mémoire PROM8 via le fil 272 afin que $R' = 1$ et $DI'_2 DI'_1 DI'_0 = 000$ ou 001 soient lus dans la mémoire RAM8 et que le compte de «1» soit relu dans la mémoire RAM7 et réécrit sans modification à travers le bus 244 et le multiplexeur 243, le bus 242 n'étant pas sélectionné dans le multiplexeur 243 par le bit $R' = 1$. La mémoire PROM8 change $R' = 1$ en $R = 0$, le cas où $R' = R = 1$ n'existant pas. Les entrées $b'_1$ à $b'_8$ des multiplexeurs $25_1$ à $25_8$ sont sélectionnées via des signaux sur un bus 283 tandis que l'entrée $b'_0$ – au lieu de $b'_8$ en fonctionnement normal du multiplexeur $25_0$ est sélectionnée. Les bits $DS_0$ et $DS_1$ sont invalidés par le bit $\overline{R'}$ dans les portes 247 et 248 ce qui permet la transmission des bits $b'_0$ à $b'_8$ à travers les multiplexeurs $26_0$ à $26_8$ et leur enregistrement dans la mémoire RAM6. Les bits $b'_1$ à $b'_8$ en sortie des multiplexeurs $25_1$ à $25_8$ sont sélectionnés aux entrées des multiplexeurs $27_1$ à $27_8$ lorsque $DI_2 DI_1 DI_0 = 000$, ou les bits $b'_0$ à $b'_7$ en sortie des multiplexeurs $25_0$ à $25_7$ sont sélectionnées aux entrées des multiplexeurs $27_1$ à $27_8$ lorsque $DI_2 DI_1 DI_0 = 001$, le bit $b'_8$ étant émis 125 µs plus tard en $b'_{10}$ à travers les multiplexeurs $25_0$ et $27_1$.

Comme montré à la Fig. 8, la partie d'émission 2 comprend un circuit de génération de signaux logiques de séquencement HT, $HT_0$ et $HT_1$ et de comptage d'octets 28. Ce circuit 28 inclut trois mémoires RAM10, RAM11 et RAM12 qui sont respectivement associées à des registres de sortie RS10 à 3 bits, RS11 et RS12 à 6 bits, et deux réseaux logiques programmables FPLA10 et FPLA12 (ou mémoires PROM) qui coopèrent entre eux.

Les mémoires RAM10 à 12 sont initialisées par le signal INIT provenant du commutateur qui est à l'état «1» juste avant le premier octet de la trame de la voie IT considérée qui est différent d'un drapeau. Tant que HT = 1, le coupleur HDLC émet des drapeaux par l'intermédiaire des secondes entrées des multiplexeurs $25_1$ à $25_8$ (Fig. 7B), les bits $HT_0$ et $HT_1$ dans la mémoire RAM10 étant également à l'état «1». Les bits HT, $HT_0$ et $HT_1$ sont à l'état «0» pendant la réception des octets de trame provenant du commutateur – à l'exception des deux octets de la séquence FCS –. Lorsque INIT = 1, le nombre d'octets de la trame Nb est écrit dans la mémoire RAM11 via le registre d'entrée RE5 et la cellule de compte d'octets dans la mémoire RAM12 est mise à zéro. A chaque octet émis par le commutateur, le réseau FPLA12 compare le nombre d'octets réel dans la mémoire RAM11 et le compte d'octets déjà émis, mémorisé dans la RAM12. Le réseau FPLA12 incrémente d'une unité le compte d'octets et l'écrit dans la mémoire RAM12 via un bus à 6 fils 280. Ce compte est bloqué lorsque le réseau FPLA12 reçoit le bit de blocage BI via le registre RE5 ce qui correspond par exemple à une voie inactive, soit généralement lorsque le bit $R'$ sur le fil 273 (Fig. 7A) est à l'état «1», ce qui indique qu'un octet supplémentaire est émis suite à l'insertion d'au moins huit zéros de bourrage. Lorsque le réseau FPLA12 détecte l'égalité des nombres dans les mémoires RAM11 et RAM12, ce qui indique l'émission du dernier octet généralement du champ d'information de la trame, il bloque également le compte d'octets dans la mémoire RAM12. Un signal correspondant au dernier octet de données DOD émis permet d'initialiser le calcul de la séquence de contrôle de trame dans un circuit 29.

La mémoire RAM10 mémorise pour chaque voie IT l'état des trois signaux de séquencement HT, $HT_0$ et $HT_1$ qui sont élaborés par le réseau logique FPLA10. Les signaux montrés à la Fig. 9 sont obtenus en fonction des états des signaux HT, $HT_0$ et $HT_1$ mémorisés 125 µs auparavant et transmis par le bus de sortie 281 du registre RS10, du signal $R'$ sur le fil 273 (Fig. 7A), du signal DOD délivré par le réseau FPLA12 et du signal INIT délivré par le commutateur via le registre RE5. Selon une variante simple, les signaux HT, $HT_0$ et $HT_1$ sont issus des relations suivantes:

$$HT = \overline{R'_0}.\,HT_0.\,HT_1 + HT.\,\overline{INIT}$$

$$HT_0 = \overline{R'}.\,HT_0.\,DOD + HT_0.\,\overline{INIT} + HT_1.\,\overline{INIT}$$

$$HT_1 = \overline{R'_0}.\,HT_0 + HT_1.\,\overline{INIT}$$

et écrits dans la mémoire RAM10 via le bus 282. D'une manière générale, le signal HT est à l'état «1» pour l'émission de drapeau, le signal $HT_0$ est à l'état «1» pour l'émission de la séquence FCS et les drapeaux, et le signal $HT_1$ est à l'état «1» pour l'émission du second octet de la séquence FCS et les drapeaux. A partir de ces trois signaux, le réseau FPLA10 établit d'autres signaux d'horloge qui sont transmis via un bus 283 et qui sont propres notamment à sélectionner les entrées des multiplexeurs $25_0$ à $25_8$ (Fig. 7B) et – déclencher le calcul de la séquence FCS dans le circuit 29 et l'émission de celle-ci en fin de trame.

Le circuit de calcul de la séquence de contrôle de trame 29 est également montré à la Fig. 8. Il comprend, comme le circuit 19 de la partie de réception (Fig. 6), une mémoire RAM13 qui mémorise dans chaque cellule associée à une voie IT à 64 kbit/s les deux octets de parité, un registre de sortie à 16 bits RS13 et trois réseaux logiques FPLA13 à FPLA15 qui sont organisés d'une manière analogue aux réseaux FPLA1 à FPLA3 montrés à la Fig. 6. Les réseaux FPLA13 à FPLA15 reçoivent via le registre RE5 les octets de données émis par le commutateur et calculent pour chacun de ces octets les deux octets de parité comme décrit dans le paragraphe 2.2.7. de l'Avis précité X.25. Grâce aux signaux d'horloge émis par le bus de sortie 283 du réseau FPLA10, le bus de sortie 291 du registre RS13 émet chacun à leur tour les deux octets de la séquence de contrôle de trame en fin de trame vers le multiplexeur 290. Puis le multiplexeur 290 délivre vers la mémoire PROM 6 des octets non significatifs qui sont constitués par huit zéros consécutifs et qui sont remplacés par des drapeaux dans les multiplexeurs $25_1$ à $25_8$ (Fig. 7B).

## Revendications

1. Coupleur entre un multiplex bidirectionnel de voies MIC et un commutateur de paquets, les voies MIC (IT) convoyant des mots (octets) ayant un nombre prédéterminé de bits (huit) et étant multiplexées mot à mot, des voies MIC étant en mode-paquet et convoyant des trames de mots de données, les trames dans une voie (IT) étant séparées les unes des autres par au moins un drapeau et incluant des zéros de bourrage afin qu'elles ne contiennent pas de drapeau, ledit coupleur comprenant des moyens (1) pour extraire les zéros de bourrage dans les trames reçues provenant du multiplex afin de les transmettre au commutateur sans les zéros de bourrage et des moyens (2) pour insérer les zéros de bourrage dans les trames émises provenant du commutateur afin de les transmettre avec les zéros de bourrage, caractérisé en ce que les moyens d'extraction (1) et les moyens d'insertion (2) des zéros de bourrage comprennent chacun des moyens logiques [(P) ROM et/ou (P) PLA] pour traiter uniquement un mot prédéterminé à la fois et transmettre au moins une partie de celui-ci sous la forme d'un mot et des moyens de mémorisation (RAM) ayant autant de cellules de mémoire que de voies (IT) pour mémoriser dans chaque cellule des caractéristiques (contextes) écrites après le traitement d'un mot d'une voie et lues pour le traitement du mot suivant de ladite voie après les traitements des autres voies, à raison d'un mot par voie (IT).

2. Coupleur conforme à la revendication 1, caractérisé en ce que les moyens logiques comprennent au moins une mémoire morte du type ROM et/ou un réseau logique du type PLA de préférence programmable.

3. Coupleur conforme à la revendication 1 ou 2, caractérisé en ce que les moyens d'extraction de zéros de bourrage (1) comprennent des moyens logiques (PROM 2) pour compter le nombre de «1» en queue de chaque mot provenant du multiplex, des moyens (RAM 2) pour mémoriser ledit nombre de «1» d'un mot de chaque voie, des moyens logiques (PROM 1bis) pour détecter les zéros de bourrage à extraire dans un mot provenant du multiplex en fonction notamment du nombre de «1» mémorisé du mot précédent de la même voie, des moyens logiques (PROM 1) pour rejeter à la fin d'un mot les zéros de bourrage détectés, des moyens logiques (15) pour extraire les zéros de bourrage détectés dans un mot et les remplacer en début de mot par les derniers bits du mot précédent, des moyens (RAM1) pour mémoriser un mot de chaque voie avec zéros de bourrage extraits, des moyens logiques (PROM 3) pour compter le nombre de zéros de bourrage modulo le nombre prédéterminé de bits dans chaque voie au fur et à mesure de la réception des mots de ladite voie, des moyens (RAM 3) pour mémoriser ledit nombre de zéros de bourrage pour chaque voie et des moyens logiques (16) de recadrage sous forme d'un mot à transmettre au commutateur incluant au début, des bits de fin d'un mot mémorisé avec zéros de bourrage extraits pour chaque voie et à la fin, des bits de début du mot suivant de ladite voie avec des zéros de bourrage à la fin, le nombre desdits bits de début du mot suivant étant égal au nombre mémorisé de zéros de bourrage (di) de ladite voie après le traitement dudit mot à transmettre (Tableau II).

4. Coupleur conforme à l'une des revendications 1 à 3, caractérisé en ce que les moyens d'insertion de zéros de bourrage (2) comprennent des moyens logiques (PROM 6) pour insérer des zéros de bourrage dans des mots provenant du commutateur, des moyens logiques (PROM 7) pour compter le nombre de «1» (242) en queue de chaque mot sortant des moyens d'insertion de zéros de bourrage (PROM 6), des moyens (RAM 7) pour mémoriser ledit nombre de «1» pour un mot de chaque voie, des moyens logiques (PROM 7) pour compter le nombre de zéros de bourrage (245) à insérer dans un mot provenant du commutateur en fonction notamment du nombre de «1» mémorisé du mot précédent de la même voie, des moyens logiques (25) pour former un mot avec les bits de début du mot avec les zéros de bourrage, des moyens logiques (26) pour former un mot avec les bits de fin du mot avec les zéros de bourrage, des moyens (RAM 6) pour mémoriser les bits de fin d'un mot avec les zéros de bourrage pour chaque voie, des moyens logiques (PROM 8) pour compter le nombre de zéros de bourrage insérés modulo le nombre prédéterminé de bits (huit) dans chaque voie au fur et à mesure de l'émission des mots dans ladite voie afin de tenir à jour le décalage entre le mot à transmettre sur le multiplex (RS 9) et le mot (RS 5) provenant du commutateur, des moyens (RAM 8) pour mémoriser ledit nombre de zéros de bourrage pour chaque voie, et des moyens logiques (27) de décadrage sous forme d'un mot à transmettre sur le multiplex (RS 9) incluant les bits de fin d'un mot précédent mémorisé avec zéros de bourrage pour chaque voie et les bits de début du mot suivant avec zéros de bourrage de ladite voie, le nombre desdits bits de fin du mot précédent étant égal au nombre mémorisé de zéros de bourrage (DI) de ladite voie après le traitement dudit mot précédent.

5. Coupleur conforme aux revendications 3 et 4, dans lequel chaque trame véhiculée par le multiplex est terminée par deux mots de séquence de contrôle de trame (FCS) obtenus par un algorithme connu, caractérisé en ce qu'il comprend des moyens logiques (FPLA 1 à 3) pour calculer selon ledit algorithme à partir d'un mot délivré par les moyens de recadrage (16) une paire de mots de parité (191), des moyens (RAM 5) pour mémoriser la paire de mots de parité de chaque voie et les appliquer aux moyens de calcul (FPLA 1 à 3) simultanément à la délivrance du mot suivant de ladite voie par les moyens de recadrage et des moyens (195) pour comparer chaque paire de mots de parité mémorisée avec une paire de mots prédéterminée (196) afin de transmettre au commutateur un bit de validation à la fin de chaque trame reçue, et en ce qu'il comprend des seconds moyens logiques (FPLA 13 à 15) pour calculer selon ledit algorithme à partir d'un mot délivré par le commutateur une paire de mots de parité, des moyens (RAM 13) pour mémoriser la paire de mots de parité de chaque voie et les appliquer aux seconds moyens de calcul (FPLA 13 à 15) simultanément à la délivrance du mot suivant de ladite voie par le commutateur et des moyens (FPLA 10, 290) pour mulitplexer chacun des deux mots de parité de chaque trame de chaque voie et le transmettre aux moyens d'insertion de zéros de bourrage (2) après que le commmtutateur ait délivré le dernier mot de ladite trame de ladite voie.

6. Coupleur conforme aux revendications 3 et 4, caractérisé en ce que les moyens d'extraction de zéros de bourrage (1) comprennent des premiers moyens logiques (PROM4) pour compter le nombre de mots par trame transmis par les moyens de recadrage (16) au fur et à mesure des mots provenant du multiplex, et des moyens (RAM4) pour mémoriser ledit nombre de mots reçus par trame pour chaque voie et le retransmettre aux premiers moyens de comptage (PROM4) lors de la réception du mot suivant de ladite voie, et en ce que les moyens d'insertion de zéros de bourrage (2) comprennent des moyens (RAM11) pour mémoriser le nombre de mots contenus dans une trame de chaque voie délivré par le commutateur au début de l'émission de ladite trame, des moyens (RAM12) pour mémoriser le nombre de mots émis pour une trame de chaque voie, des moyens logiques (FPLA12) pour compter le nombre de mots par trame de chaque voie transmis par le commutateur et l'écrire dans les moyens de mémorisation dudit nombre de mots par trame et des moyens logiques (FPLA12) pour comparer ledit nombre mémorisé de mots contenus dans une trame et ledit nombre mémorisé de mots émis dans ladite trame afin de détecter la fin de ladite trame lorsque les nombres sont égaux.

**Patentansprüche**

1. Koppler zwischen einem bidirektionalen Multiplexer für PCM-Kanäle und einer Paketvermittlung, wobei die PCM-Kanäle (IT) Wörter (Oktette) mit einer vorbestimmten Anzahl (acht) von Bits übertragen und wortweise gemultiplext sind, und wobei PCM-Kanäle im Modus-Paket sind und Abschnitte von Daten-Wörtern übertragen, wobei die Abschnitte in einem Kanal (IT) voneinander durch wenigstens einen Übergang getrennt sind und Füllnullen enthalten, damit sie keinen Übergang enthalten, wobei der Koppler Mittel (1) zur Extraktion der Füllnullen in den empfangenen, aus dem Multiplexer stammenden Abschnitten um sie ohne die Füllnullen an die Vermittlung zu übertragen, sowie Mittel (2) zur Einfügung von Füllnullen in die aus der Vermittlung kommenden, gesendeten Abschnitte aufweist, um sie mit den Füllnullen zu übertragen, dadurch gekennzeichnet, dass die Extraktionsmittel (1) und die Einfügungsmittel (2) für die Füllnullen jeweils Logikeinrichtungen [(P) ROM und/oder (P) PLA] um nur ein vorbestimmtes Wort auf einmal zu behandeln und wenigestens einen Teil desselben in Form eines Wortes zu übertragen, sowie Speichereinrichtungen (RAM) enthalten, welche ebensoviele Speicherzellen wie Kanäle aufweisen, um in jeder Speicherzelle Eigenschaften (Kontexte) zu speichern, die nach der Behandlung eines Wortes eines Kanals eingeschrieben und zur Behandlung des folgenden Wortes des Kanals nach den Behandlungen der anderen Kanäle gelesen werden und zwar wortweise pro Kanal (IT).

2. Koppler nach Anspruch 1, dadurch gekennzeichnet, dass die Logikeinrichtungen wenigstens einen Lesespeicher ROM und/oder ein vorzugsweise programmierbares logisches Netzwerk PLA enthalten.

3. Koppler nach Anspruch 1 oder 2, dadurch gekennzeichnet, dass die Extraktionsmittel für die Füllnullen (1) logische Einrichtungen (PROM 2) zur Berechnung der Anzahl der hintereinander in jedem aus dem Multiplexer kommenden Wort auftretenden Einsen, sowie Mittel (RAM 2) zum Speichern der Anzahl von Einsen in einem Wort jedes Kanals, sowie logische Einrichtungen (PROM 1bis) zur Ermittlung der zu extrahierenden Füllnullen in jedem aus dem Multiplexer kommendem Wort als Funktion insbesondere der gespeicherten Anzahl von Einsen des in dem gleichen Kanal vorhergehenden Wortes, weitere logische Einrichtungen (PROM 1) zur Unterdrükkung der am Ende eines Wortes festgestellten Füllnullen, weiterhin logische Einrichtungen (15) zum Extrahieren der in einem Wort festgestellten Füllnullen und zu deren Ersatz am Anfang des Wortes durch die letzten Bits des vorhergehenden Wortes, sowie Einrichtungen (RAM 1) zum Speichern eines Wortes für jeden Kanal mit extrahierten Füllnullen, weiterhin logische Einrich-

tungen (PROM 3) zur Berechnung der Anzahl der Füllnullen Modulo der vorbestimmten Anzahl von Bits in jedem Kanal je nach dem Empfang der Wörter des Kanals, sowie Mittel (RAM 3) zum Speichern von Füllnullen für jeden Kanal und schliesslich weitere logische Einrichtungen (16) zur Neuformatierung in ein an die Vermittlung zu übertragendes Wort aufweisen, das am Anfang Schlussbits eines gespeicherten Wortes mit extrahierten Füllnullen für jeden Kanal und am Ende Anfangsbits des folgenden Wortes des Kanals mit Füllnullen am Ende enthält, wobei die Zahl der Anfangsbits des folgenden Wortes gleich der Zahl der gespeicherten Füllnullen (di) des Kanals nach der Behandlung des zu übertragenden Wortes (Tabelle II) ist.

4. Koppler nach einem der Ansprüche 1 bis 3, dadurch gekennzeichnet, dass die Einfügungsmittel für die Füllnullen (2) logische Einrichtungen (PROM 6) zur Einfügung von Füllnullen in die aus der Vermittlung kommenden Wörter, logische Einrichtungen (PROM 7) zur Berechnung der Zahl der hintereinander in jedem Wort auftretenden Einsen (242), welches aus den Einfügungsmittel für die Füllnullen (PROM 6) kommt, weiterhin Mittel (RAM 7) zum Speichern der Anzahl von Einsen für ein Wort jedes Kanals, logische Einrichtungen (PROM 7) zur Berechnung der in jedes aus der Vermittlung kommende Wort einzufügenden Anzahl von Füllnullen (245) in Abhängigkeit insbesondere von der Anzahl der für das in dem Kanal vorhergehende Wort gespeicherten Einsen, logische Einrichtungen (25) zur Bildung eines Wortes mit den Anfangsbits des Wortes mit den Füllnullen, logische Einrichtungen (26) zur Bildung eines Wortes mit den Schlussbits des Wortes mit den Füllnullen, Einrichtungen (RAM 6) zum Speichern der Schlussbits eines Wortes mit den Füllnullen für jeden Kanal, weitere logische Einrichtungen (PROM 8) zur Berechnung der einzufügenden Anzahl von Füllnullen Modulo der vorbestimmten Anzahl (acht) von Bits in jedem Kanal je nach dem Senden von Wörtern in dem Kanal, um die Verschiebung zwischen einem über den Multiplexer (RS 9) zu übertragenden Wort und dem aus der Vermittlung kommenden Wort (RS 5) zu verfolgen, Einrichtungen (RAM 8) zum Speichern der Anzahl der Füllnullen für jeden Kanal sowie schliesslich weitere logische Einrichtungen (27) zur Entformatierung in ein über den Multiplexer (RS 9) zu übertragendes Wort aufweisen, das die Schlussbits des gespeicherten vorhergehenden Wortes mit Füllnullen für jeden Kanal und die Anfangsbits des folgenden Wortes mit Füllnullen des Kanals enthält, wobei die Anzahl der Schlussbits des vorhergehenden Wortes gleich der Anzahl der gespeicherten Füllnullen (DI) des Kanals nach Behandlung des vorhergehenden Wortes ist.

5. Koppler nach Ansprüchen 3 und 4, in welchem jeder durch den Multiplexer transportierte Abschnitt von zwei aufeinanderfolgenden Abschnittsteuerwörtern (F CS) beendet ist, welche aus einem bekannten Algorithmus erhalten werden, dadurch gekennzeichnet, dass logische Einrichtungen (FPLA 1 bis 3) zur algorithmusgemässen Berechnung eines Paares von Paritätswörtern (191) ausgehend von einem von den Einrichtungen zur Neuformatierung (16) empfangenen Wort, Einrichtungen (RAM 5) zum Speichern des Paares von Paritätswörtern jedes Kanals und deren Weiterleitung an Recheneinrichtungen (FPLA 1 bis 3) gleichzeitig mit der Ausgabe des folgenden Wortes des Kanals durch die Neuformatierungseinrichtungen, sowie Einrichtungen (195) zum Vergleich jedes Paares von gespeicherten Paritätswörtern mit einem Paar vorbestimmter Wörter (196) vorgesehen sind, um an die Vermittlung ein Gültigkeitsbit am Ende jedes empfangenen Abschnittes zu übertragen, und das zweite logische Einrichtungen (FPLA 13 bis 15) zur algorithmusgemässen Berechnung eines Paares von Paritätswörtern ausgehend von einem von der Vermittlung gelieferten Wort, Einrichtungen (RAM 13) zum Speichern des Paares der Paritätswörter jedes Kanals und zu deren Weiterleitung an zweite Recheneinrichtungen (FPLA 13 bis 15) gleichzeitig mit der Abgabe des folgenden Wortes des Kanals durch die Vermittlung, sowie Einrichtungen (FPLA 10, 290) zum Multiplexen jedes der beiden Paritätswörter jedes Abschnittes jedes Kanals und zur dessen Übertragung an die Einfügungsmittel für die Füllnullen (2) vorgesehen sind, nachdem die Vermittlung das letzte Wort des Abschnittes des Kanals geliefert hat.

6. Koppler nach Ansprüchen 3 und 4, dadurch gekenzeichnet, dass die Extraktionsmittel für die Füllnullen (1) erste logische Einrichtungen (PROM 4) zur Berechnung der Anzahl der Wörter pro von den Neuformatierungseinrichtungen (16) übertragenem Abschnitt im Masse der aus dem Multiplexer kommenden Wörter, sowie Einrichtung (RAM 4) zum Speichern der Anzahl der aus dem Abschnitt für jeden Kanal empfangenen Wörter und zu deren Rückübertragung an erste Recheneinrichtungen (PROM 4) zum Zeitpunkt des Empfangs des nachfolgenden Wortes des Kanals aufweisen, und dass die Einfügungsmittel für die Füllnullen (2) Einrichtungen (RAM 11) zum Speichern der Anzahl der in einem Abschnitt jedes Kanals enthaltenen Wörter, welche von der Vermittlung zu Beginn des Sendens des Abschnittes abgegeben werden, Einrichtungen (RAM 12) zum Speichern der Anzahl der für einen Abschnitt jedes Kanals gesendeten Wörter, logische Einrichtungen (FPLA 12) zur Berechnung der Anzahl der Wörter pro Abschnitt jedes Kanals, der von der Vermittlung übertragen wurde, und zum Einschreiben derselben in die Speichereinrichtungen für die Anzahl der Wörter pro Abschnitt, und logische Einrichtungen (FPLA 12) zum Vergleichen der gespeicherten Anzahl von in einem Abschnitt enthaltenen Wörtern, die mit der gespeicherten Anzahl der in dem Abschnitt gesendeten Wörter aufweisen, um das Ende des Abschnittes bei Gleichheit der Anzahlen festzustellen.

**Claims**

1. Coupler between a PCM channel bidirec- tionnal multiplex and a packet switching unit, the PCM channels (IT) carrying words (bytes) with a predetermined number of bits (weight) and being multiplexed word by word, PCM channels being packet mode channels and carrying data word frames, the frames in a channel (IT) being separated one from each other by at least one flag and including filling zeros such that frames contain no flag, said coupler comprising means (1) for extracting the filling zeros from the frames received from the multiplex in order to transmit it without the filling zeros to the switching unit and means (2) for inserting the filling zeros in the transmitted frames delivered from the switching unit in order to transmit it with the filling zeros, characterized in that the extracting means (1) and the inserting means (2) each comprise logic means [(P) ROM and/or (P) PLA] for processing solely one predetermined word at a time and transmitting at least one portion of this one in the form of a word and memorizing means (RAM) having as many memory cells as channels (IT) for memorizing in each cell characteristics (contexts) written after a word in a channel has been processed and read for the next word in said channel to be processed after the other channels have been processed, at the rate of one word per channel (IT).

2. Coupler according to claim 1, characterized in that the logic means comprise at least one memory of type ROM and/or a field logic array of type PLA preferably programmable.

3. Coupler according to claim 1 or 2, characterized in that filling zero extracting means (1) comprises logic means (PROM 2) for counting the number of «1» at the tail of each word delivered from the multiplex, means (RAM 2) for memorizing said number of «1» per word in each channel, logic means (PROM 1 bis) for detecting the filling zeros to be extracted from a word delivered from the multiplex in terms especially of the memorized number of «1» for the previous word of the same channel, logic means (PROM 1) for relegating the detected filling zeros at the end of a word, logic means (15) for extracting the filling zeros detected in a word and replacing it at the start of a word by the last bits of the previous word, means (RAM 1) for memorizing a word having extracted filling zeros from each channel, logic means (PROM 3) for counting the number of filling zeros, modulo the predetermined number of bits in each channel as the words in said channel are being received, means (RAM 3) for memorizing said number of filling zeros for each channel, and logic realigning means (16) to transmit to the switching unit a realigned word including at the start, bits from the end of a memorized word with extracted filling zeros for each channel and at the end, bits from the start of the next word of said channel having filling zeros at the end, the number of said start bits of the next word being equal to the memorized number of filling zeros (di) of said channel after said word to be transmitted has been processed (table II).

4. Coupler according to one of claims 1 to 3, characterized in that the filling zero inserting means comprise logic means (PROM 6) for inserting filling zeros in words delivered from the switching unit, logic means (PROM 7) for counting the number of «1» (242) at the tail of each word outgoing from the filling zero inserting means, (PROM 6), means (RAM 7) for memorizing said number of «1» for a word in each channel, logic means (PROM 7) for counting the number of filling zeros (245) to be inserted in a word delivered from the switching unit in terms especially of memorized number of «1» in the previous word of the same channel, logic means (25) for forming a word with the start bits of the word having the filling zeros, logic means (26) for forming a word with the end bits of the word having the filling zeros, means (RAM 6) for memorizing the end bits of a word having the filling zeros for each channel, logic means (PROM 8) for counting the number of inserted filling zeros modulo the predetermined bit number (eight) in each channel as the words in said channel are being transmitted in order to keep the shift between the word to be transmitted in the multiplex (RS 9) and the word (RS 5) delivered from the switching unit, means (RAM 8) for memorizing said filling zero number for each channel, and logic desaligning means (27) to transmit in the multiplex (RS 9) a word including bits from the end of a memorized previous word having filling zeros for each channel and the bits from the start of the next word having filling zeros for said channel, the number of said end bits of the previous word being equal to the memorized number of filling zeros (DI) of said channel after the said previous word has been processed.

5. Coupler according to claims 3 and 4, in which each frame carried by the multiplex ends with two frame checking sequence words (FCS) obtained using a known algorithm, characterized in that it comprises logic means (FPLA 1 to 3) for calculating a pair of parity words (191) using said algorithm based on a word transmitted from the realigning means, (16), means (RAM 5) for memorizing the parity word pair of each channel to supply it to the calculating means (FPLA 1 to 3) simultaneously with the transmission of the next word of said channel from said realigning means, and means (195) for comparing each memorized parity word pair with a predetermined word pair (196) to transmit a validity bit to the switching unit at the end of each received frame, and in that it comprises second logic means (FPLA 13 to 15) for calculating a pair of parity words using said algorithm based on a word transmitted from the switching unit, means (RAM 13) for memorizing the parity word pair of each channel to supply it to the second calculating means (FPLA 13 to 15) simultaneously with the transmission of the next word of said channel from the switching unit, and means (FPLA 10, 290) for multiplexing each of the two parity words in each frame of each channel to transmit it to the filling zero inserting means (2) after the switching unit has transmitted the last word in said frame of said channel.

6. Coupler according to claims 3 and 4, characterized in the filling zero extracting means (1) comprises first logic means (PROM 4) for counting the number of words per frame transmitted by the realigning means (16) as the words are being received from the multiplex, and means (RAM 4) for memorizing said number of words received per frame for each channel (RAM 4) to transmit it to the first counting means (PROM 4) during reception of the next word of said channel, and in that the filling zero inserting means (2) comprises means (RAM 11) for memorizing the number of words contained in a frame of each channel delivered from the switching unit at the transmission start of said frame, means (RAM 12) for memorizing the number of words transmitted for a frame of each channel, logic means (FPLA 12) for counting the number of words per frame of each channel transmitted from the switching unit to writing it in the for means memorizing said number of words per frame, and logic means (FPLA 12) for comparing said memorized number of words contained in a frame and said memorized number of transmitted words of said frame in order to detect the end of said frame when the numbers are equal.

## FIG.1

SUPER MULTIPLEX à 16384 k bit/s

A

MIC4  MIC5  MIC6  MIC7  MIC0  MIC1  MIC2  MIC3  MIC4  MIC5  MIC6  MIC0  MIC1  MIC2  MIC3  MIC4  MIC5  MIC6  MIC7

125 μs/32

1 octet

trame i-1 | trame i d'une voie MIC à 2048 k bit/s | trame i+1

B  IT28  IT29  IT30  IT31  IT0  --- IT j --- IT25  IT26  IT27  IT28  IT29  IT30  IT31  IT0  IT1  IT2

125 μs

1 octet

trame HDLC d'une voie IT
en mode paquet à 64 k bit/s

C  1 octet

| F | A | C | FCS | FCS | F | F | F | A | C | I | FCS | FCS | F | A | C |

drapeau d'ouverture          drapeau de fermeture

## FIG.9

|        | Octet |     |     |     | F       |     |     |     |
|--------|-------|-----|-----|-----|---------|-----|-----|-----|
|        | trame |     | FCS |     | drapeau |     |     |     |
|        | i     | i+1 | 1°  | 2°  | 1°      | 2°  | 3°  | 4°  |

DOD

R'

HT

$HT_0$

$HT_1$

INIT

# FIG.2

# FIG.3

# FIG.4

$\omega$

$2\omega$

$\omega.2\omega$

$\omega.\overline{2\omega}$

$\overline{\omega}.\overline{2\omega}$

Adressage en
écriture

Adressage en
lecture

Adresses stables (488 ns)

Traitement de
l'octet

FIG.5

FIG.6

FIG.7A

FIG.7B

FIG.8
PARTIE D'EMISSION 2

0 094 322